(19) Europäisches Patentamt
European Patent Office
Office européen des brevets

(11) **EP 2 093 592 A1**

(12) **EUROPEAN PATENT APPLICATION**
published in accordance with Art. 153(4) EPC

(43) Date of publication:
**26.08.2009 Bulletin 2009/35**

(51) Int Cl.:
**G02B 5/02** (2006.01)   **G02B 1/11** (2006.01)
**G02F 1/1335** (2006.01)

(21) Application number: **07850296.0**

(22) Date of filing: **07.12.2007**

(86) International application number:
**PCT/JP2007/073718**

(87) International publication number:
**WO 2008/072581 (19.06.2008 Gazette 2008/25)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **08.12.2006 JP 2006332600**
**15.12.2006 JP 2006338396**
**26.03.2007 JP 2007079127**
**26.03.2007 JP 2007079128**

(71) Applicant: **Mitsubishi Rayon Co. Ltd.**
**Minato-ku**
**Tokyo 108-8506 (JP)**

(72) Inventors:
• **YAMASHITA, Tomoyoshi**
**Yokohama-shi, Kanagawa 230-0053 (JP)**
• **OKAMOTO, Yoshiyuki**
**Yokohama-shi, Kanagawa 230-0053 (JP)**
• **OOTSUKI, Haruko**
**Yokohama-shi, Kanagawa 230-0053 (JP)**

(74) Representative: **TBK-Patent**
**Bavariaring 4-6**
**80336 München (DE)**

(54) **ANTIGLARE FILM, DISPLAY EMPLOYING THE SAME, LIGHT-DIFFUSING FILM, AND SURFACE LIGHT SOURCE SYSTEM EMPLOYING THE SAME**

(57) An actinic-energy-ray-curable resin composition (10) is supplied to the nip between a roll-shaped die (7) obtained by subjecting the peripheral surface of a roll-shaped metal member to blasting to thereby form a finely roughened structure and a filmy light-transmitting substrate (9) disposed along the peripheral surface of the roll-shaped die (7), thereby forming the actinic-energy-ray-curable resin composition (10) into a thin film. The finely roughened structure in the peripheral surface of the roll-shaped die (7) is transferred to a surface of the thin film. This actinic-energy-ray-curable resin composition (10) is cured to form a light-transmitting thin film. This film is bonded to the surface of the light-transmitting substrate (9) to obtain an antiglare film. That surface of the light-transmitting thin film which has the finely roughened structure has an arithmetic average inclination angle of 0.5-3.5 degrees.

FIG.4

**Description**

**Technical Field**

The present invention relates to an antiglare film which is placed on the front of a display surface, such as an image display section of a display device, and which prevents external light from being reflected on the display surface to reduce glare on the display surface and therefore makes it easier to watch an image displayed on the display surface. Moreover, the present invention relates to a display device employing the antiglare film.

Furthermore, the present invention relates to a light diffusing film and its production method. Specifically, the present invention relates to a light diffusing film that are suitable for the construction of a surface light source device which can be used as a backlight of a liquid crystal display device, and a surface light source system employing the film.

**Background Art**

Conventionally, for example, as disclosed in JP-B-3515426 (Patent Document 1) or JP-A-2006-154838 (Patent Document 2), as the antiglare film, the one with a light diffusing resin film formed on the surface of a transparent substrate is used. As for the antiglare film disclosed in Patent Document 1, the light diffusing resin film is given light-diffusing capability by putting, in a light-transmitting synthetic resin, light-transmitting particles whose refractive index is different from the synthetic resin, or forming a finely roughened structure on the surface, thereby giving the light diffusing resin film the antiglare capability. Moreover, as for the antiglare film disclosed in Patent Document 2, a roughened structure is formed on the surface of the light diffusing resin film by shape transfer, thereby giving the light diffusing resin film the capability of diffusing light and providing the light diffusing resin film with the antiglare capability.

Moreover, for example, as disclosed in JP-A-2000-193805 (Patent Document 3), there is a light diffusing sheet that serves as the light diffusing film for backlights. Such light diffusing sheets have the following technical problems:

(1) If the light diffusing sheet is produced by shape transfer using a resin sheet, this leads to poor stability in production;
(2) If a light source whose directivity is high due to a light deflection element is used, a glare phenomenon (speckle) occurs.

Patent Document 1: JP-B-3515426
Patent Document 2: JP-A-2006-154838
Patent Document 3: JP-A-2000-193805

**Disclosure of the Invention**

**Problems to be Solved by the Invention**

The antiglare films disclosed in the above Patent Documents 1 and 2, when the roughened structure is formed on the surface of the light diffusing resin film, is produced by forming a free surface according to the composition of a resin film formation paint at the time of drying the paint or transferring a shape transfer surface of the resin sheet to the surface of a resin layer. Accordingly, it is difficult to stabilize the formation of the surface roughness during the production of the obtained antiglare film and to reduce the costs of producing the antiglare film due to the complexity of processing.

Moreover, as for the antiglare films disclosed in the above Patent Document 1 and Patent Document 2, a glare phenomenon often occurs especially when the display device emits a beam whose directivity is high.

Therefore, the object of the present invention is to provide an antiglare film which makes it easy to improve, as for its production, the yield rates and productivity and which is also capable of reducing production costs.

Moreover, the object of the present invention is to provide an antiglare film which is, as for its functionality, capable of reducing glare even when the display device emits a beam whose directivity is high.

Furthermore, the object of the present invention is to solve the above technical problems and continuously produce inexpensive light diffusing films with high yield rates and high productivity.

Furthermore, another object of the present invention is to provide a light diffusing film having high optical transparency and high hiding or masking or opacifying capacity with no glare.

**Means for Solving the Problems**

According to the present invention, in order to solve some of the above problems, there is provided an antiglare film comprising a filmy light-transmitting substrate and a light-transmitting thin film attached to a surface of the filmy light-transmitting substrate, which is obtained by:

supplying an active energy ray curing resin composition to between a roll-shaped die whose peripheral surface is equipped with a finely roughened structure formed by subjecting a peripheral surface of a roll-shaped metallic member to a blasting process and the filmy light-transmitting substrate disposed along the peripheral surface of the roll-shaped die, to thereby keep the active energy ray curing resin composition in a form of a thin film therebetween; and

transferring the finely roughened structure of the peripheral surface of the roll-shaped die to a surface of the thin film while curing the active energy ray curing resin composition to form the light-transmitting thin film, to thereby attach the light-transmitting thin film having the finely roughened structure to the surface of the filmy light-transmitting substrate,

wherein the surface of the light-transmitting thin film having the finely roughened structure has an arithmetic average inclination angle of 0.5 to 3.5 degrees.

In one aspect of the present invention, blast particles for the blasting process are substantially ball-shaped abrasive particles with the mean diameter of 5 to 45 $\mu$m. In one aspect of the present invention, blast particles for the blasting process are substantially ball-shaped abrasive particles with the upper-limit diameter of less than or equal to 45 $\mu$m. In one aspect of the present invention, the average spacing between local peaks on the surface of the light-transmitting thin film having the finely roughened structure is in the range of 5 to 30 $\mu$m. In one aspect of the present invention, wherein the concave-and-convex pitch on the surface of the light-transmitting thin film having the finely roughened structure is in the range of 20 to 60 $\mu$m. In one aspect of the present invention, on the surface of the light-transmitting thin film having the finely roughened structure, the arithmetic mean deviation of the profile is in the range of 0.015 to 0.3 $\mu$m, and the ten-point height of irregularities is in the range of 0.1 to 2 $\mu$m.

In one aspect of the present invention, the total light transmittance of the antiglare film is greater than or equal to 90%, and the diffuse transmittance of the antiglare film is in the range of 3 to 55%. In one aspect of the present invention, the total light transmittance of the antiglare film is greater than or equal to 90%, and the haze value of the antiglare film is in the range of 3 to 55. In one aspect of the present invention, as for the antiglare film, the rate of luminance reduction for the normal luminance of an outgoing beam at a time when a beam of a distribution having a peak value in the normal direction is entered is equal to or less than 17%.

Moreover, according to the present invention, in order to solve some of the above problems, there is provided a display device including a display section, and the above-mentioned antiglare film disposed in front of the display section, wherein the full width at half maximum of a distribution of a beam entering the antiglare film from the display section is less than or equal to 40 degrees.

In one aspect of the present invention, the display section includes a light-transmitting display element and an edge-lighting type surface light source device disposed behind the light-transmitting display element, the surface light source device includes a primary light source, a light guide that receives a beam emitted from the primary light source, guides the beam therein and directs the beam to the outside of the light guide, and a light deflection element disposed so as to receive the outgoing beam from the light guide, and the light deflection element is a prism sheet having a light entering surface on which a plurality of elongated prisms are disposed parallel to each other.

According to the present invention, in order to solve some of the above problems, there is provided a light diffusing film obtained by transferring, with use of an active energy ray curing resin, an irregular finely-roughened structure obtained by subjecting a surface of a roll-shaped die to a blasting process to a surface of a transparent substrate and curing a transferred structure,

wherein an average spacing S between local peaks of the finely roughened structure is in the range of 5 to 30 $\mu$m (preferably in the range of 10 to 26 $\mu$m, and more preferably in the range of 10 to 20 $\mu$m).

In one aspect of the present invention, the irregular finely-roughened structure is obtained by subjecting, with the use of ball-shaped abrasive particles with the mean diameter of 5 to 45 $\mu$m (preferably in the range of 10 to 30 $\mu$m, and more preferably in the range of 10 to 20 $\mu$m), the surface of the roll-shaped die to the blasting process. In one aspect of the present invention, the irregular finely-roughened structure is obtained by subjecting, with the use of abrasive particles (which are preferably ball-shaped) with the upper-limit diameter of less than or equal to 70 $\mu$m (preferably less than or equal to 45 $\mu$m, more preferably less than or equal to 40 $\mu$m, and even more preferably less than or equal to 35 $\mu$m), the surface of the roll-shaped die to the blasting process.

In one aspect of the present invention, the arithmetic average inclination angle R$\Delta$a of the finely roughened structure is in the range of 1.5 to 9.0 degrees (preferably in the range of 1. 5 to 4.6 degrees, more preferably in the range of 2. 0 to 4.6 degrees, and even more preferably in the range of 2.5 to 3.8 degrees). In one aspect of the present invention, the concave-and-convex pitch Sm of the finely roughened structure is in the range of 20 to 80 $\mu$m (preferably in the range of 25 to 70 $\mu$m, and more preferably in the range of 30 to 60 $\mu$m). In one aspect of the present invention, the total light transmittance of the light diffusing film is greater than or equal to 90% (preferably greater than or equal to 92%), and the diffuse transmittance of the light diffusing film is in the range of 20 to 80%(preferably in the range of 20 to 55%, and more preferably in the range of 30 to 50%). In one aspect of the present invention, the total light transmittance of the light diffusing film is greater than or equal to 90% (preferably greater than or equal to 92%), and the haze value of the light diffusing film is in the range of 25 to 85 (preferably in the range of 30 to 60, and more preferably in the range of 35 to 55). In one aspect of the present invention, the arithmetic mean deviation of the profile Ra of the finely roughened structure is in the range of 0.06 to 0.7 $\mu$m (preferably in the range of 0.09 to 0.40 $\mu$m, and more preferably in the range of 0.10 to 0.25 $\mu$m), and the ten-point height of irregularities of the finely roughened structure is in the range of 0.5 to 2.5 $\mu$m (preferably in the range of 0.7 to 2.0 $\mu$m, and more preferably in the range of 0. 7 to 1. 9 $\mu$m). In one aspect of the present invention, the rate of luminance reduction for the normal luminance of an outgoing beam from the light diffusing film at a time when a beam of the desired distribution enters the light diffusing film in the normal direction is equal to less than 35% (preferably equal to or less than 25%, and more preferably equal to less than 20%).

In one aspect of the present invention, a prism is provided on the back surface of the light diffusing film. In one aspect of the present invention, the prism sheet is a totally reflecting prism sheet.

In one aspect of the present invention, the substantially periodically-roughened structure is previously provided on the surface of the roll-shaped die, and a sloping surface of the roughened structure has a roughened structure produced by a roll-shaped die to which a finely roughened structure was irregularly given by blast processing.

In one aspect of the present invention, the average inclination angle of the sloping surface of the roughened structure is in the range of 5 to 20 degrees (preferably in the range of 8 to 18 degrees, and more preferably in the range of 10 to 15 degrees). In one aspect of the present invention, the pitch of the substantially periodically-roughened structure is in the range of 10 to 90 $\mu$m (preferably in the range of 15 to 60 $\mu$m, more preferably in the range of 20 to 40 $\mu$m).

Moreover, according to the present invention, there is provided a display system including the light diffusing film, wherein the full width at half maximum of the distribution of an incoming beam entering the light diffusing film is equal to or less than 40 degrees (preferably equal to or less than 30 degrees, and more preferably equal to or less than 25 degrees).

Moreover, according to the present invention, there are provided a surface light source system including a primary light source, a light guide whose end surface receives a beam emitted from the primary light source and which guides the beam therein and directs the beam to an exit surface from which the beam is emitted, and a light diffusing film equipped with a plurality of elongated lenses to deflect the beam from the light guide upward so that the beam rises above the exit surface, and being adapted to dispose a liquid crystal element directly on the light diffusing film, wherein the light diffusing film is a light diffusing film obtained by transferring, with the use of an active energy ray curing resin, a finely roughened structure obtained by subjecting the surface of the roll-shaped die to the blasting process to the surface of a transparent substrate, and curing the transferred structure, and the average spacing between local peaks of the finely roughened structure is in the range of 10 to 30 $\mu$m (preferably in the range of 10 to 26 $\mu$m). There are also provided a light diffusing film used in the surface light source system.

In one aspect of the present invention, the arithmetic average inclination angle of the finely roughened structure of the light diffusing film equipped with the plurality of elongated lenses is in the range of 3.0 to 4.6 degrees (preferably in the range of 3.5 to 4.5 degrees, and more preferably in the range of 3.5 to 4.0 degrees).

Furthermore, according to the present invention, in order to solve some of the above problems, there is provided a light diffusing film production method including a step of transferring, with the use of the active energy ray curing resin, the finely roughened structure obtained by subjecting, with the use of particles (which are preferably ball-shaped) with the mean diameter of 5 to 45 $\mu$m (preferably in the range of 10 to 40 $\mu$m, and more preferably in the range of 15 to 35 $\mu$m) and the upper-limit diameter of less than or equal to 45 $\mu$m (preferably less than or equal to 40$\mu$m, more preferably less than or equal to 35 $\mu$m), the surface of the roll-shaped die to the blasting process to the surface of a transparent substrate, and curing the transferred structure, and a step of giving a finely roughened structure whose arithmetic average inclination angle is 1.5 to 4.6 degrees (preferably in the range of 2.0 to 4.0 degrees, and more preferably in the range of 2.5 to 3.8 degrees), and whose average spacing between local peaks is in the range of 5 to 30 $\mu$m (preferably in the range of 10 to 26 $\mu$m, more preferably in the range of 10 to 20 $\mu$m).

### Advantageous Effects of the Invention

According to the present invention as described above, by using the roll-shaped die on whose peripheral surface the finely roughened structure was formed as a result of subjecting the peripheral surface of the roll-shaped metallic member to the blasting process, the finely roughened structure is transferred to the surface of the thin film of the active energy ray curing resin composition in order to form the light-transmitting thin film having the finely roughened structure with the arithmetic average inclination angle of 0.5 to 3.5 degrees. Therefore, it is easy to improve the yield rates of products and increase productivity. It is also possible to reduce production costs. Moreover, the antiglare film capable of reducing the occurrence of a glare phenomenon even when the display section emits a beam having high directivity can be provided.

Moreover, according to the present invention, the following effects are obtained:

(1) With the use of the roll-shaped die, the inexpensive light diffusing films can be continuously produced with high yield rates and high productivity;

(2) Since the evenly, finely roughened structure is formed on the light diffusing film, the light diffusing film with high transparency, no glare and high hiding capability can be produced;

(3) Because of not being sheet production, production costs can be reduced.

**Brief Description of the Drawings**

FIG. 1 is a schematic, partial cross-sectional diagram showing an antiglare film according to an embodiment of the present invention, and a liquid crystal display device employing the antiglare film according to an embodiment of the present invention;

FIG. 2 is a schematic perspective view for describing a production method of a roll-shaped die;

FIG. 3 is a schematic diagram showing a method according to which the antiglare film is produced using the roll-shaped die, according to an embodiment of the present invention; and

FIG. 4 is a schematic diagram showing how a beam is deflected by a prism sheet within an X-Z plane.

**List of Reference Signs in the Drawings**

| | |
|---|---|
| 1: | primary light source |
| 2: | light source reflector |
| 3: | light guide |
| 31: | light incident end surface |
| 32: | end surface |
| 33: | light exit surface |
| 34: | back surface |
| 4: | prism sheet |
| 41: | light entering surface |
| 411: | elongated prism |
| 411a, 411b: | prism face |
| 42: | light exiting surface |
| 5: | light-reflecting element |
| 7: | mold member (roll-shaped die) |
| 9: | light-transmitting substrate |
| 10: | active energy ray curing composition |
| 11: | pressure mechanism |
| 12: | resin tank |
| 13: | nozzle |
| 14: | active energy ray irradiation device |
| 16: | roll-shaped metallic member |
| 28: | nip roll |
| 100: | antiglare film |
| 101: | light-transmitting substrate |
| 102: | light-transmitting thin film |

**Best Mode for Carrying Out the Invention**

An embodiment of the present invention will be described in detail with reference to the accompanying drawings.

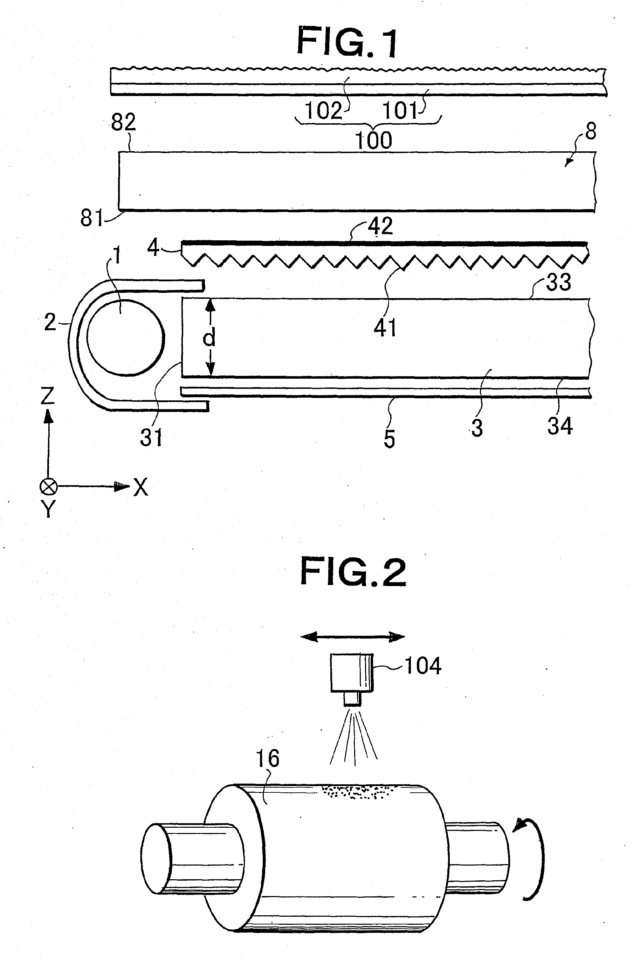

FIG. 1 is a schematic, partial cross-sectional diagram illustrating: an antiglare film according to an embodiment of the present invention; and an liquid crystal display device employing the antiglare film, which serves as a display device, according to an embodiment of the present invention.

The liquid crystal display device includes a light transmitting liquid crystal display element 8, an edge-lighting type surface light source device which is placed behind the element 8, and an antiglare film 100. The top surface of the liquid crystal display element 8 serves as a display surface of a display section of the liquid crystal display device. This display surface is viewed from above by a viewer through the antiglare film 100.

The antiglare film 100 is disposed on the top surface of the liquid crystal display element 8. The antiglare film 100 includes a filmy light-transmitting substrate 101, and a light-transmitting thin film 102 attached to one of the principal surfaces (the top surface in the case of FIG. 1) of the light-transmitting substrate. A first principal surface of the light-transmitting thin film 102 (the under surface in the case of FIG. 1) is attached to the top surface of the light-transmitting substrate 101, and its second principal surface (the top surface in the case of FIG. 1) has a finely roughened structure. A light entrance surface of the antiglare film 100 is the other principal surface (the under surface in the case of FIG. 1) of the light transmitting substrate 101, and a light exit surface of the antiglare film 100 is the second principal surface of the light-transmitting thin film 102. The light entrance surface of the antiglare film 100 is positioned so as to face the display surface of the display section of the liquid crystal display device, or the top surface of the liquid crystal display element 8. Therefore, a beam emitted from the display surface of the liquid crystal display device enters the light entrance surface of the antiglare film 100, passes through the light-transmitting substrate 101 and the light-transmitting thin film 102, and exits through the light exit surface, or a surface having the finely roughened structure of the light-transmitting thin film 102 (a finely roughened structure surface).

The finely roughened structure of the second principal surface of the light-transmitting thin film 102 is formed by transferring the shape to the surface of an active energy ray curing resin thin film with the use of a roll-shaped die obtained by a blasting process. An active energy ray may be ultraviolet rays, electron rays, or the like. The finely roughened structure surface of the light-transmitting thin film 102 has an arithmetic average inclination angle R$\Delta$a of 0.5 to 3.5 degrees. This arithmetic average inclination angle can achieve good capability of antiglare and the effect of preventing glare. The blasting process helps form, in a good and stable manner, the large shape transfer surface by which the finely roughened structure surface having such an arithmetic average inclination angle range will be formed. The arithmetic average inclination angle R$\Delta$a of the finely roughened structure surface is preferably in the range of 1.0 to 3.5 degrees, more preferably in the range of 1.8 to 3.0 degrees, and even more preferably in the range of 2.0 to 2.8 degrees. If the arithmetic average inclination angle R$\Delta$a of the finely roughened structure surface is too small, the projection of external-light images becomes strong, making it difficult to obtain a substantial capability of antiglare. Meanwhile, if the arithmetic average inclination angle R$\Delta$a of the finely roughened structure surface is too large, scattering tends to occur excessively, transmitted light tends to be lost due to returning light, and the luminance tends to decline further. Moreover, glare tends to become strong. In order to reduce glare, the finely roughened structure needs to be formed evenly and finely, and it is desirable that the arithmetic average inclination angle R$\Delta$a be small. Moreover, if the average inclination angle is too large, a displayed image tends to become obscure and unclear.

The arithmetic average inclination angle R$\Delta$a tends to become large as a blasting pressure gets large. In order to obtain the antiglare film having the finely roughened structure whose arithmetic average inclination angle R$\Delta$a is in the range of 0.5 to 3.5 degrees, preferably, the blasting process of a roll-shaped die should be carried out under the following condition if a distance between the surface of a roll and a blast nozzle tip is 220 mm:

(a) In the case where the material of the roll-shaped die is copper, or soft nickel whose Vickers hardness is approximately 200: The blasting process is carried out with ceramic beads having mean diameter of 15 to 20 $\mu$m and the blasting pressure of 0.05 to 0.1 MPa.
(b) In the case where the material of the roll-shaped die is hard nickel whose Vickers hardness is approximately 500: The blasting process is carried out with ceramic beads having mean diameter of 15 to 20 $\mu$m and the blasting pressure of 0.3 to 0.7 MPa.

As for the finely roughened structure surface of the light-transmitting thin film 102, the average spacing (S) between the local peaks is preferably in the range of 5 to 30 $\mu$m. The average spacing of the local peaks is more preferably in the range of 10 to 25 $\mu$m, and even more preferably in the range of 10 to 20 $\mu$m. If the average spacing of the local peaks of the finely roughened structure surface is too small, it tends to be difficult to obtain a substantial capability of antiglare. Meanwhile, if the average spacing of the local peaks of the finely roughened structure surface is too large, scattering tends to occur excessively, transmitted light tends to be lost due to returning light, and the luminance tends to decline further. Moreover, glare tends to become strong. In order to reduce glare, the finely roughened structure needs to be formed evenly and finely, and it is desirable that the average spacing between the local peaks be small.

As for the finely roughened structure surface of the light-transmitting thin film 102, the concave-and-convex pitch is preferably in the range of 20 to 60 $\mu$m. The concave-and-convex pitch is more preferably in the range of 25 to 55 $\mu$m, and even more preferably in the range of 30 to 50 $\mu$m. If the concave-and-convex pitch of the finely roughened structure surface is too small, it tends to be difficult to obtain a substantial capability of antiglare. Meanwhile, if the concave-and-convex pitch of the finely roughened structure surface is too large, scattering tends to occur excessively, transmitted light tends to be lost due to returning light, and the luminance tends to decline further. Moreover, glare tends to become strong. In order to reduce glare, the finely roughened structure needs to be formed evenly and finely, and it is desirable that the concave-and-convex pitch be small.

As the finely roughened structure surface of the light-transmitting thin film 102, the arithmetic mean deviation of the profile is preferably in the range of 0.015 to 0.3 $\mu$m, while the ten-point height of irregularities is preferably in the range of 0.1 to 2 $\mu$m. The arithmetic mean deviation of the profile is more preferably in the range of 0.05 to 0.3 $\mu$m, even more preferably in the range of 0.07 to 0.25 $\mu$m, and most preferably in the range of 0.09 to 0.22 $\mu$m. The ten-point height of irregularities is more preferably 0.3 to 2 $\mu$m, even more preferably 0.5 to 1.3 $\mu$m, and most preferably 0.5 to 1.1 $\mu$m. If the arithmetic mean deviation of the profile and the ten-point height of irregularities of the finely roughened structure surface are too small, it tends to be difficult to obtain a substantial capability of antiglare. Meanwhile, if the arithmetic mean deviation of the profile and the ten-point height of irregularities of the finely roughened structure surface are too large, scattering tends to occur excessively, transmitted light tends to be lost due to returning light, and the luminance tends to decline further. Moreover, if the arithmetic mean deviation of the profile and the ten-point height of irregularities are too large, the displayed image becomes obscure and unclear.

As for the antiglare film 100, the total light transmittance is preferably greater than or equal to 90%, while the diffuse transmittance is preferably in the range of 3 to 55%. Moreover, as for the antiglare film 100, the haze value is preferably in the range of 3 to 55. The total light transmittance is more preferably greater than or equal to 92%. The diffuse transmittance is more preferably in the range of 20 to 55%, even more preferably in the range of 25 to 47%, and most preferably in the range of 30 to 43%. The haze value is more preferably in the range of 25 to 55, even more preferably 30 to 50, and most preferably in the range of 35 to 47. If the total light transmittance is too small, the luminance and the display quality tend to decline. If the diffuse transmittance and the haze value are too small, it tends to be difficult to obtain a substantial capability of antiglare. Meanwhile if the diffuse transmittance and the haze value are too large, scattering tends to occur excessively, transmitted light tends to be lost due to returning light, and the luminance tends to decline further. Moreover, if the diffuse transmittance and the haze value are too large, the displayed image tends to become obscure and unclear.

Furthermore, as for the antiglare film 100, the rate of luminance reduction for the normal luminance of an outgoing beam at a time when a beam of a distribution having a peak value in the normal direction enters the antiglare film 100 is preferably equal to or less than 17%. The rate of luminance reduction is more preferably equal to or less than 12%, and even more preferably equal to or less than 10%.

Hereinafter, embodiments of a light diffusing film of the present invention will be described.

The light diffusing film is obtained by transferring the irregular finely-roughened structure obtained by subjecting the surface of the roll-shaped die to the blasting process to the surface of a transparent substrate with the use of the active energy ray curing resin, and curing the transferred structure. The average spacing S between the local peaks of the finely roughened structure is preferably in the range of 5 to 30 $\mu$m (more preferably in the range of 10 to 26 $\mu$m, and even more preferably in the range of 10 to 20 $\mu$m). If the average spacing S of the local peaks is less than 5 $\mu$m, this is not desirable because this could lead to a decrease in the capability of diffusing light and hiding. Meanwhile, if the average spacing S is greater than 30 $\mu$m, this is not desirable because scattering tends to occur excessively, transmitted light tends to be lost due to returning light, and the luminance tends to decline further. Moreover, glare (speckle) tends to become strong. In order to reduce glare, the finely roughened structure needs to be formed evenly and finely, and it is desirable that the average spacing S between the local peaks be small.

If the blasting pressure is constant, the average spacing S between the local peaks tends to become large as the diameter of blast particles gets large. Moreover, if the diameter of blast particles is constant, the average spacing S between the local peaks tends to become large as the blasting pressure gets large. In order to obtain the light diffusing film having the finely roughened structure whose average spacing S between the local peaks is in the range of 5 to 30 $\mu$m, preferably, the blasting process of the roll-shaped die should be carried out under the following condition if a distance between the surface of the roll and the blast nozzle tip is 220 mm:

(a) In the case where the material of the roll-shaped die is copper, or soft nickel whose Vickers hardness is approximately 200: The blasting process is carried out with ceramic beads having mean diameter of 15 to 20 $\mu$m and the blasting pressure of 0.05 to 0.8 MPa.
(b) In the case where the material of the roll-shaped die is hard nickel whose Vickers hardness is approximately 500: The blasting process is carried out with ceramic beads having mean diameter of 15 to 20 $\mu$m and the blasting pressure of 0.3 to 0.8 MPa.

It is desirable that the blasting process for the surface of the roll-shaped die be carried out with substantially ball-shaped abrasive particles whose mean diameter is in the range of 5 to 45 $\mu$m (more preferably in the range of 10 to 30 $\mu$m, and even more preferably in the range of 10 to 20 $\mu$m). If the diameter of the abrasive particles is less than 5 $\mu$m, the energy of blasting is too weak to process the surface of the die. Therefore, the roughened structure for exhibiting the uniform, substantial capability of hiding and diffusing light cannot be obtained. Moreover, if the abrasive particles with a diameter of more than 45 $\mu$m are used, the surface of the roughened structure becomes too coarse. This is not desirable because scattering tends to occur excessively, transmitted light tends to be lost due to returning light, and the luminance tends to decline further. Moreover, this is not desirable because the roughened structure is coarse, and strong glare tends to occur. In order to reduce glare, the finely roughened structure needs to be formed evenly and finely.

The upper limit of the diameter of the used abrasive particles (which are preferably ball-shaped) is preferably less than 70 $\mu$m (more preferably less than 45 $\mu$m, even more preferably less than 40 $\mu$m, and most preferably less than 35 $\mu$m). If the upper limit of the diameter of the abrasive particles is greater than 70 $\mu$m, this is not desirable because bright points may emerge and because glare may occur locally. The upper limit of the diameter of the particles is a value according to which 1% or less of the abrasive particles whose diameter is equal to or greater than the diameter of the particles are mixed.

It is desirable that the arithmetic average inclination angle R$\Delta$a of the finely roughened structure be in the range of 1.5 to 9. 0 degrees (preferably in the range of 1.5 to 4. 6 degrees, more preferably in the range of 2.0 to 4.6 degrees). If the arithmetic average inclination angle R$\Delta$a of the finely roughened structure is less than 1.5 degrees, this cannot exhibit a substantial capability of diffusing light and hiding. Meanwhile, if the arithmetic average inclination angle R$\Delta$a is greater than 9. 0 degrees, scattering tends to occur excessively, transmitted light tends to be lost due to returning light, and the luminance tends to decline further. Particularly, this is not desirable because glare tends to become strong. In order to reduce glare, the finely roughened structure needs to be formed evenly and finely, and it is desirable that the arithmetic average inclination angle R$\Delta$a be small.

The arithmetic average inclination angle R$\Delta$a tends to become large as the blasting pressure increases. In order to obtain the light diffusing film having the finely roughened structure whose arithmetic average inclination angle R$\Delta$a is in the range of 1.5 to 4. 6 degrees, the blasting process of the roll-shaped die should be carried out preferably under the following condition if the distance between the surface of the roll and the blast nozzle tip is 220 mm:

(a) In the case where the material of the roll-shaped die is copper, or soft nickel whose Vickers hardness is approximately 200: The blasting process is carried out with ceramic beads and the blasting pressure of 0.05 to 0.2 MPa.
(b) In the case where the material of the roll-shaped die is hard nickel whose Vickers hardness is approximately 500: The blasting process is carried out with ceramic beads and the blasting pressure of 0.4 to 0.6 MPa.

It is desirable that the concave-and-convex pitch Sm of the finely roughened structure be in the range of 20 to 80 $\mu$m (preferably 25 to 70 $\mu$m, and more preferably in the range of 30 to 60 $\mu$m). If the concave-and-convex pitch Sm of the finely roughened structure is less than 20 $\mu$m, this cannot exhibit a substantial capability of hiding and diffusing light. Meanwhile, if the pitch Sm is greater than 80 $\mu$m, this is not desirable because scattering tends to occur excessively, transmitted light tends to be lost due to returning light, and the luminance tends to decline further. In order to reduce glare, the finely roughened structure needs to be formed evenly and finely, and it is desirable that the average spacing be small.

It is desirable that the total light transmittance of the light diffusing film be greater than or equal to 90% (preferably greater than or equal to 92%) and that the diffuse transmittance be in the range of 20 to 80% (preferably 20 to 60%, more preferably 25 to 55%, and most preferably 30 to 50%). As for the characteristic of the light diffusing film, in terms of the luminance and the display quality, it is desirable that the total light transmittance be equal to or greater than 90%. However, in terms of the capability of hiding and diffusing light, it is desirable that the diffuse transmittance be in the range of 20 to 80%. If the diffuse transmittance is less than 20%, this cannot exhibit a substantial capability of diffusing light and hiding. Meanwhile, if the diffuse transmittance is greater than 80%, this is not desirable because scattering occurs excessively, transmitted light is lost due to returning light, and the luminance declines further.

It is desirable that the total light transmittance of the light diffusing film be equal to or greater than 90% (preferably equal to or greater than 92%) and that the haze value be in the range of 25 to 85 (preferably in the range of 25 to 65, more preferably in the range of 30 to 60, and most preferably in the range of 35 to 55). As for the characteristic of the light diffusing film, in terms of the luminance and the display quality, it is desirable that the total light transmittance be equal to or greater than 90%. However, in terms of the capability of hiding and diffusing light, it is desirable that the haze value be in the range of 25 to 85. If the haze value is less than 25, this cannot exhibit a substantial capability of diffusing light and hiding. Meanwhile, if the haze value is greater than 85, this is not desirable because scattering occurs excessively, transmitted light is lost due to returning light, and the luminance declines further.

It is desirable that the arithmetic mean deviation of the profile Ra of the finely roughened structure be in the range of 0.07 to 0.7 $\mu$m (preferably in the range of 0.07 to 0.5 $\mu$m, more preferably in the range of 0.08 to 0.4 $\mu$m, and most preferably in the range of 0.1 to 0.25 $\mu$m) and that the ten-point height of irregularities Rz be in the range of 0.5 to 2.5 $\mu$m (preferably in the range of 0.7 to 2.0 $\mu$m, and more preferably in the range of 0.7 to 1.9 $\mu$m). If the arithmetic mean deviation of the profile Ra and the ten-point height of irregularities Rz of the light diffusing film are less than 0.07 $\mu$m and 0.5 $\mu$m, respectively, then this cannot exhibit a substantial capability of diffusing light and hiding. Meanwhile, if the arithmetic mean deviation of the profile Ra and the ten-point height of irregularities Rz are greater than 0.7 $\mu$m and 2.50 $\mu$m, respectively, this is not desirable because scattering occurs excessively, transmitted light is lost due to returning light, and the luminance declines further.

It is desirable that the rate of luminance reduction for the normal luminance of an outgoing beam from the light diffusing film at a time when a beam of the desired distribution enters the light diffusing film in the normal direction be equal to less than 35% (preferably equal to or less than 30%, more preferably equal to or less than 25%, and most preferably equal to or less than 20%).

A prism may be given to the back side of the light diffusing film. The prism sheet may be a totally reflecting prism sheet.

It is desirable that the light diffusing film have the roughened structure produced by the roll-shaped die whose surface was previously given a substantially periodically-roughened structure and then given an irregular finely roughened structure as a result of the blasting processing applied to the sloping surface of the roughened structure.

It is desirable that the sloping surface of the roughened structure have an average inclination angle of 5 to 20 degrees (preferably 8 to 18 degrees, and more preferably 10 to 15 degrees). Basically, the regularly-formed structure, like the above smoothly sloping surface, hardly induces speckle, and has a function of effectively deflecting a beam passing through the light diffusing film at an angle of several degrees. On the other hand, the slight roughness of the irregular finely-roughened structure is enough to give the capability of hiding and diffusing light randomly, and therefore this makes it possible to reduce the occurrence of speckle. In the end, it is possible to make the light diffusing film which has an outstanding capacity for hiding with the occurrence of speckle reduced to a low level.

It is desirable that the pitch of the substantially periodically roughened structure be in the range of 10 to 90 $\mu$m (preferably in the range of 15 to 60 $\mu$m, and more preferably 20 to 40 $\mu$m). If the pitch is less than 10 $\mu$m, it is difficult to make the die for forming the periodically roughened structure. If the pitch is greater than 100 $\mu$m, this is not desirable because moiré can be visually confirmed in relation to the other optical members.

With the use of the above light diffusing film, a display system can be configured with high directivity according to which the full width at half maximum (FWHM) of the distribution of an incoming beam entering the light diffusing film is equal to or less than 40 degrees (preferably equal to or less than 30 degrees, and more preferably equal to or less than 25 degrees). In the display system with high directivity, strong glare (speckle) tends to occur. In terms of the effect in preventing glare, significant improvement can be achieved when the technique of the present invention's light diffusing film is applied to a display device with high directivity according to which the FWHM of the distribution of an incoming beam entering the light diffusing film is equal to or less than 40 degrees.

In a surface light source system which includes a primary light source, a light guide whose end surface receives a beam emitted from the primary light source and which guides the beam therein and directs the beam to an exit surface from which the beam is emitted, and a light diffusing film equipped with a plurality of elongated lenses to deflect the beam from the light guide upward so that the beam rises above the exit surface, and which is adapted to place an liquid crystal element directly on the light diffusing film, the following light diffusing film can be used. The light diffusing film is obtained by transferring, with the use of the active energy ray curing resin, the finely roughened structure obtained by subjecting the surface of the roll-shaped die to the blasting process to the surface of the transparent substrate, and curing the transferred structure, and the average spacing S between the local peaks of the finely roughened structure is in the range of 10 to 30 $\mu$m (preferably 10 to 26 $\mu$m).

It is desirable that the arithmetic average inclination angle R$\Delta$a of the finely roughened structure of the light diffusing film be in the range of 3.0 to 9.0 degrees (preferably 3.0 to 4.6 degrees, more preferably in the range of 3.5 to 4.5 degrees, and most preferably 3.5 to 4.0 degrees).

With the use of the particles (which are preferably ball-shaped) whose mean diameter is in the range of 5 to 45 $\mu$m (preferably 10 to 40 $\mu$m, and more preferably 15 to 35 $\mu$m) and whose upper limit of diameter is equal to or less than 70 $\mu$m (preferably less than or equal to 45 $\mu$m, more preferably less than or equal to 40 $\mu$m, and most preferably less than or equal to 35 $\mu$m), the finely roughened structure is obtained by subjecting the surface of the metallic roll-shaped die to the blasting process. Then, the finely roughened structure is transferred to the surface of the transparent substrate with the use of the active energy ray curing resin, and the transferred structure is cured. Therefore, the light diffusing film is produced as a result of being equipped with the finely roughened structure whose arithmetic average inclination angle R$\Delta$a is in the range of 1.5 to 9.0 degrees (preferably in the range of 1.5 to 4.6 degrees, more preferably in the range of 2.0 to 4.0 degrees, and most preferably in the range of 2.5 to 3.8 degrees) and whose average spacing S between the local peaks is in the range of 5 to 30 $\mu$m (preferably in the range of 10 to 26 $\mu$m, and more preferably in the range of 10 to 20 $\mu$m).

FIG. 2 is a schematic perspective view to describe a production method of the roll-shaped die. At least, the peripheral section of a roll-shaped metallic member 16 is made of such metal as chrome, nickel, stainless steel (SUS), copper, aluminum, brass, and steel. The roll-shaped metallic member 16 is supported so that the rotational shaft (rotational center) is held horizontally. Above the roll-shaped metallic member 16, a nozzle of a blasting device (blast nozzle) 104 is disposed such that the nozzle can reciprocally move parallel to the rotational shaft of the roll-shaped metallic member 16. The blast nozzle 104 is directed toward the rotational shaft of the roll-shaped metallic member 16. When the rotation of the roll-shaped metallic member 16 is stopped, the blast nozzle 104 is moved along the rotational shaft of the roll-shaped metallic member 16 in a first direction while the blast particles are discharged from the blast nozzle 104 to the peripheral surface of the roll-shaped metallic member 16. Therefore, a strip-shaped area of the peripheral surface of the roll-shaped metallic member 16, which has a predetermined width and extends in the direction of the rotational shaft, is subjected to blasting. Then, after being rotated around the rotational shaft through a predetermined angle, the roll-shaped metallic member 16 is stopped, and the blast nozzle 104 is similarly moved along the rotational shaft of the roll-shaped metallic member 16 in a second direction while the blast particles are discharged from the blast nozzle 104 to the peripheral surface of the roll-shaped metallic member 16. Therefore, a strip-shaped area of the peripheral surface of the roll-shaped metallic member 16, which has a predetermined width and extends in the direction of the rotational shaft, is subjected to blasting. There is no problem if this strip-shaped area partly overlaps with the strip-shaped area made by the previous discharging of blast particles. After that, the blasting process is carried out in the same way all over the peripheral surface of the roll-shaped metallic member 16. As a result, the roll-shaped die whose peripheral surface is equipped with the finely roughened structure is obtained.

The blast particles used in the above blasting process is preferably the substantially ball-shaped abrasive particles whose mean diameter is in the range of 5 to 45 $\mu$m. For example, the substantially ball-shaped abrasive particles include ball-shaped ceramic beads, and ball-shaped glass beads. The mean diameter is more preferably in the range of 10 to 30 $\mu$m, and even more preferably in the range of 10 to 25 $\mu$m. If the mean diameter of the abrasive particles is too small, the energy of blasting is too week to process the surface of the metallic member, and it tends to be difficult to obtain the finely roughened structure which exhibits the uniform, substantial capability of antiglare. Moreover, if the mean diameter of the abrasive particles is too large, the roughness of the surface of the finely roughened structure becomes too large. Therefore, scattering tends to occur excessively, transmitted light tends to be lost due to returning light, and the luminance tends to decline further. Moreover, since the finely roughened structure is coarse, strong glare tends to occur. Moreover, as for the blast particles used in the blasting process, the upper limit of the diameter of the abrasive particles is preferably in equal to or less than 45 $\mu$m. The upper limit of the diameter of the particles is more preferably equal to or less than 30 $\mu$m, and more preferably less than or equal to 25 $\mu$m. If the upper limit of the diameter of the abrasive particles is too large, bright points tend to occur, and glare tends to occur locally. Here, the upper limit of the diameter of the particles is defined as a value according to which 1% by mass or less of the abrasive particles whose diameter is equal to or greater than the diameter of the particles are mixed.

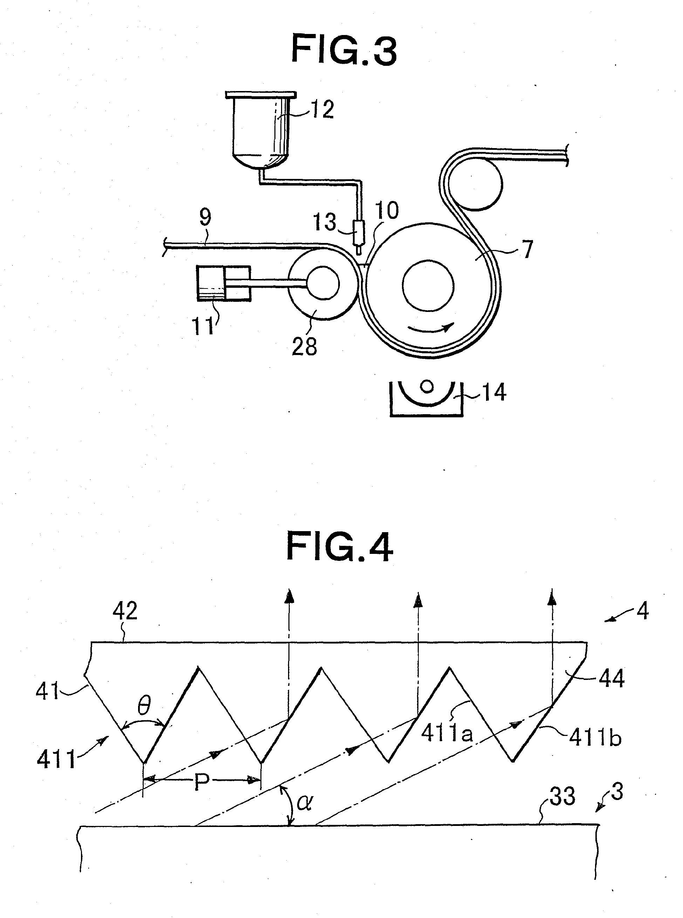

FIG. 3 is a schematic diagram illustrating a production method of the antiglare film 100 by the above roll-shaped die, according to an embodiment of the present invention. Incidentally, the light diffusing film of the present invention can be made in the same way.

In FIG. 3, the reference numeral 7 denotes a mold member (the above.roll-shaped die) having a cylindrical peripheral surface on which a shape transfer surface is formed to transfer the shape to the upper surface (the roughened structure surface) of the light-transmitting thin film 102 which serves as the light exit surface of the antiglare film 100. As shown in FIG. 3, the filmy light-transmitting substrate 9 (101) is supplied along the shape transfer surface, or the peripheral surface, of the roll-shaped die 7. The active energy ray curing composition 10 is continuously supplied from a resin tank 12 through a nozzle 13 to between the roll-shaped die 7 and the light-transmitting substrate 9. Outside of the light-transmitting substrate 9, a nip roll 28 is disposed to make the supplied active energy ray curing composition 10 uniform in thickness. A metallic roll, a rubber roll or the like is used as the nip roll 28. Moreover, in order to make the active energy ray curing composition 10 uniform in thickness, it is desirable that the nip roll 28 be processed with high precision in terms of circularity, roughness of the surface and the like. In the case of the rubber roll, the rubber hardness is preferably equal to or greater than 60 degrees. The nip roll 28 is required to precisely adjust the thickness of the thin film of the active energy ray curing composition 10, and is operated by a pressure mechanism 11. The pressure mechanism 11 includes a hydraulic cylinder, an air pressure cylinder, a screw mechanism and the like. The air pressure cylinder is preferably used because of its simplicity of the mechanism and the like. The air pressure is controlled by a pressure regulation valve or the like.

The viscosity of the active energy ray curing composition 10 supplied to between the roll-shaped die 7 and the light-transmitting substrate 9 is preferably maintained constant in order to make the thickness of the obtained light-transmitting thin film (102) constant. In general, the viscosity is preferably in the range of 20 to 3000 mPa·S, and more preferably 100 to 1000 mPa·S. When the viscosity of the active energy ray curing composition 10 is made equal to or greater than 20 mPa·S, there is no need to set the nip pressure at very low level or accelerate enormously the molding speed in order to maintain the thickness of the light-transmitting thin film constant. If the nip pressure is set at a very low level, this makes it difficult to operate the pressure mechanism 11 in a stable manner, thereby making the thickness of the light-transmitting thin film (102) uneven. Moreover, if the molding speed is too fast, the active energy ray curing composition may not be sufficiently cured because the irradiance of the active energy ray is not enough. Meanwhile, when the viscosity of the active energy ray curing composition 10 is equal to or less than 3000 mPa·S, the curing composition 10 sufficiently spreads all over the shape transfer surface structure of the roll-shaped die, making it easy to precisely transform the roughened structure and preventing defects related to the mixture of air bubbles and a reduction in productivity associated with a lowering in molding speed. Therefore, in order to keep the viscosity of the active energy ray curing composition 10 at a constant level, heat source equipment, such as sheath heaters or warm water jackets, should be preferably installed inside or outside the resin tank 12 to control the temperature of the active energy ray curing composition 10.

After the active energy ray curing composition 10 is supplied to between the peripheral surface of the roll-shaped die 7 and the light-transmitting substrate 9, an active energy ray irradiation device 14 emits an active energy ray, with which the active energy ray curing composition 10 is irradiated through the light-transmitting substrate 9 while being sandwiched between the roll-shaped die 7 and the light-transmitting substrate 9, in order to polymerize and cure the active energy ray curing composition 10, thereby transferring the shape transfer surface formed on the peripheral surface of the roll-shaped die 7. The active energy ray irradiation device 14 includes a chemical lamp for chemical reactions, a low pressure mercury lamp, a high pressure mercury lamp, a metal halide lamp, a visible light halogen lamp and the like. As for the irradiance of the active energy ray, the cumulative energy of the ray with a wavelength of 200 to 600 nm should be preferably in the range of 0.1 to 50 J/cm$^2$. Moreover, as for the ambient conditions for irradiation of the active energy ray, irradiation may be carried out in the air or under an inert gas atmosphere such as nitrogen atmosphere, argon atmosphere, or the like. Then, the antiglare film (100) including the light-transmitting substrate 9 (101) and the light-transmitting thin film (102) formed from the active energy ray curing resin is separated from the roll-shaped die 7.

According to the above production method of the antiglare film 100, the antiglare films are continuously produced with the use of the roll-shaped die 7. Therefore, the molding members have high durability while yield rates and productivity improve, leading to a reduction in production costs. Moreover, according to this method, since the shape transfer surface of the roll-shaped die 7 is formed by the blasting process, the finely roughened structure capable of reducing the occurrence of a glare phenomenon can be easily and precisely formed.

The thickness of the light-transmitting thin film 102 is, for example, in the range of 10 to 50 $\mu$m, preferably in the range of 15 to 40 $\mu$m, and more preferably in the range of 20 to 30 $\mu$m. If the light-transmitting thin film 102 is too thin, the optical characteristic may be destabilized due to the slight unevenness in thickness of the film. If the light-transmitting thin film 102 is too thick, the film can be curved, leading to a reduction in flexibility and an increase in the cost of materials.

In order to prevent the finely roughened structure of the light-transmitting thin film 102 from being easily scratched, the hardness of the light-transmitting thin film 102 should be preferably greater than or equal to 5H in pencil hardness grade.

The light-transmitting thin film 102 is, for example, made of active energy ray curing resin. Considering such points as improving the luminance of the displayed image of the liquid crystal display device, the refractive index of the light-transmitting thin film 102 should be preferably high. Specifically, the refractive index should be greater than or equal to 1.49, preferably greater than or equal to 1.5, and more preferably greater than or equal to 1.6. The active energy ray curing resin that forms the light-transmitting thin film 102 is not limited to specific types as long as the resin is the one cured by active energy rays like ultraviolet or electron rays. For example, the active energy ray curing resin includes polyesters, epoxy resins, and (meth) acrylate resins such as polyester (meth) acrylate, epoxy (meth) acrylate, and urethane (meth)acrylate. Among them, (meth)acrylate resins are particularly preferable in terms of optical characteristic and the like. As the active energy ray curing composition used for such curing resins, in terms of management, curing and the like, the one containing the following main components are preferable: multifunctional acrylate and/or multifunctional methacrylate (also referred to as multifunctional (meth)acrylate, hereinafter), monofunctional acrylate and/or methacrylate (also referred to as mono (meth) acrylate, hereinafter), and a photoinitiator related to the active energy rays. Typical multifunctional (meth)acrylate includes polyol poly (meth) acrylate, polyester poly (meth) acrylate, epoxy poly (meth)acrylate, urethane poly(meth)acrylate, and the like. These materials are used individually or in combination. Moreover, a mono (meth) acrylate includes a (meth) acrylic ester of a monoalcohol, a (meth)acrylic ester of a polyol, and the like. Especially, a synthetic resin whose main component is a multifunctional acrylate is suitable for the light-transmitting thin film 102.

Moreover, in order to give antifouling effect, hydrophilic or fluorinated active energy ray curing resins should be preferably used.

The light-transmitting thin film 102 may contain a light-diffusing material inside the film 102. The light-diffusing material can be appropriately selected from among the following: inorganic particles such as silica, alumina and glass; cross-linking organic particles such as a polymethyl methacrylate, polystyrene, a polyurethane, acryl-styrene copolymers, a benzoguanamine, and a melamine; and silicone particles and the like. Incidentally, two or more light-diffusing materials may be used together depending on purpose. The average diameter of particles of the light-diffusing materials is, for example, in the range of 2. 0 to 10 $\mu$m, preferably in the range of 3 to 8 $\mu$m, and more preferably in the range of 3 to 6 $\mu$m. If the diameter of the particles is less than 2 $\mu$m, this can lead to stain and a reduction in the capability of antiglare. If the diameter is greater than 10 $\mu$m, glare tends to become strong. However, within the above diameter range, two or more light-diffusing materials with the average diameter may be mixed and used together. The standard deviation of the particle-diameter distribution of the light-diffusing materials is, for example, less than or equal to 5 $\mu$m. The difference in refractive index between the light-diffusing material and a light-transmitting thin film binder where the material is dispersed is, for example, in the range of 0.03 to 0.09. The ratio of the light-diffusing material to the light-transmitting thin film 102 by weight is, for example, less than or equal to 20%, preferably less than or equal to 10%, and more preferably less than or equal to 5%.

A material that allows active energy rays, such as ultraviolet rays and electron rays, to pass therethrough is suitable for the material of the light-transmitting substrate 101. The material may include flexible glass plates and the like. However, the following materials are particularly preferable: a triacetate (TAC) film whose birefringence is small, or a TAC film to which a hard coating or an antistatic coating is applied. The light-transmitting substrate also includes other transparent resin sheets and films such as: polyester resins like a polyethylene terephthalate (PET) and a polyethylene naphthalate (PEN); acrylic resins like a polymethyl methacrylate (PMMA); cellulose resins like a diacetyl cellulose and a triacetyl cellulose; styrene resins like polystyrene (PSt) and an acrylonitrile-styrene copolymer (AS); olefine resins like a polyethylene (PE), a polypropylene (PP), a polyolefin having a cyclic or norbornene structure, and a ethylene-propylene copolymer (EP); polyamide resins like a nylon and an aromatic polyamide (PA); polycarbonate (PC) resins; vinyl chloride (PVC) resins; and polymethacrylimide (PMI) resins. In terms of strength and workability like management, the thickness of the light-transmitting substrate 101 is, for example, preferably in the range of 10 to 300 $\mu$m, more preferably in the range of 20 to 200 $\mu$m, and even more preferably in the range of 30 to 100 $\mu$m. Incidentally, in order to improve adhesiveness between the light-transmitting thin film 102 made of the active energy ray curing resin and the light-transmitting substrate 101, an adhesiveness improvement process like an anchor coating should be preferably applied to the surface of the light-transmitting substrate 101.

Here, as shown in FIG. 1, the edge-lighting type surface light source device includes: a plate-like light guide 3 whose at least one side end surface is a light incident end surface 31 and whose one primary top surface substantially perpendicular to the light incident end surface 31 is a light exit surface 33; a linear primary light source 1 which is disposed so as to face the light incident end surface 31 of the light guide 3 and which is covered by a light source reflector 2; a prism sheet 4 which is disposed on the light exit surface of the light guide 3 and which is a lens sheet that serves as a light-deflecting element; and a light-reflecting element 5 which is disposed so as to face a back surface 34 of the light guide 3, which is the opposite side of the light guide 3 with respect to the light exit surface 33.

The light guide 3 is substantially rectangular in shape as a whole, disposed parallel to an XY plane. The light guide 3 has four side end surfaces, with one pair of side end surfaces parallel to a YZ plane. At least one of the side end surfaces parallel to the YZ plane is the light incident end surface 31. The light incident end surface 31 is disposed so as to face the primary light source 1. The beam emitted from the primary light source 1 is incident on the light incident end surface 31 and introduced into the light guide 3. For example, according to the present invention, another primary light source may be disposed so as to face another side end surface, like a side end surface 32, which is the opposite side of the light guide 3 with respect to the light incident end surface 31.

The two primary surfaces of the light guide 3 that are substantially perpendicular to the light incident end surface 31 are positioned substantially parallel to the XY plane. One of the primary surfaces (which is the top surface in the diagram) is the light exit surface 33. The light exit surface 33 is given a directive light outgoing mechanism including a rough surface or a plurality of elongated lenses. Therefore, the beam that is introduced into the light guide 3 through the light incident end surface 31 is guided in the light guide 3, and then emitted from the light exit surface 33 as a beam having directivity within a plane (XZ plane) perpendicular to the light incident end surface 31 and the light exit surface 33. An angle of the direction of a peak (peak beam) of an outgoing beam distribution on the distribution inside the XZ plane with respect to the light exit surface 33 is represented as $\alpha$. The angle $\alpha$ is, for example, in the range of 10 to 40 degrees, while the FWHM of the outgoing beam distribution is, for example, in the range of 10 to 40 degrees.

As for the rough surface and the plurality of elongated lenses which are formed on the surface of the light guide 3, an average inclination angle $\theta$a regarding ISO4287/1-1984 should be preferably in the range of 0.5 to 15 degrees in order to improve the evenness of the luminance in the light exit surface 33. The average inclination angle $\theta$a is more preferably in the range of 1 to 12 degrees, and even more preferably in the range of 1.5 to 11 degrees. The most suitable range for the average inclination angle $\theta$a should be set preferably according to the ratio (L/d) of the length (L) of the light guide 3 in a direction along which the introduced beam propagates relative to the thickness (d) of the light guide 3. That is, if the ratio L/d of the light guide 3 used is in the range of 20 to 200, the average inclination angle $\theta$a should be preferably in the range of 0.5 to 7.5 degrees, more preferably in the range of 1 to 5 degrees, and even more preferably in the range of 1. 5 to 4 degrees. Moreover, if the ratio L/d of the light guide 3 used is less than or equal to 20, the average inclination angle $\theta$a should be preferably in the range of 7 to 12 degrees, and more preferably in the range of 8 to 11 degrees.

According to JIS B0601:'82 and B0031:'82, after a profile curve function f (x) is obtained by measuring the shape of the rough surface with the use of stylus type surface roughness meter and regarding the coordinate of the measurement direction as x, the average inclination angle $\theta$a of the rough surface formed on the light guide 3 can be calculated using the follow equations (1) and (2):

$$\Delta a = (1/L) \int_0^L \left| (d/dx) f(x) \right| dx \quad \ldots (1)$$

$$\theta a = \tan^{-1}(\Delta a) \quad \ldots (2)$$

where L represents the length of measurement and $\Delta a$ represents the tangent of the average inclination angle $\theta a$.

Furthermore, as for the light guide 3, the light emission rate should be preferably in the range of 0.5 to 5%, and more preferably in the range of 1 to 3%. When the light emission rate is greater than or equal to 0.5%, the amount of light emitted from the light guide 3 increases, therefore achieving substantial luminance. Moreover, the light emission rate less than or equal to 5% prevents a large amount of light from being emitted near the primary light source 1, reducing the attenuation of light emission with respect to the X direction in the light exit surface 33. As a result, the evenness of the luminance at the light exit surface 33 tends to improve. Accordingly, when the light emission rate of the light guide 3 is in the range of 0.5 to 5%, a beam emitted from the light guide 3 has high directivity with the following outgoing-light characteristics: an angle of a peak beam on the luminous intensity distribution (within the XZ plane) of the beam emitted from the light exit surface is in the range of 50 to 80 degrees with respect to a normal line of the light exit surface; and the FWHM of the luminous intensity distribution (within the XZ plane) on the XZ plane perpendicular to both the light incident end surface and the light exit surface is in the range of 10 to 40 degrees. The direction of the outgoing beam can be efficiently deflected by a prism sheet 4. Therefore, the surface light source device having high luminance can be provided.

According to the present invention, the light emission rate of the light guide 3 is defined as follows. If the thickness of the light guide 3 (the dimension in the Z direction) is regarded as d, the relation between the light intensity ($I_0$) of the outgoing light at the edge near the light incident end surface 31 of the light exit surface 33 and the outgoing light intensity (I) at a position which is a distance L away from the edge near the light incident end surface 31 satisfies the following equation (3):

$$I = I_o (A/100)\left[1 - (A/100)\right]^{L/d} \quad \ldots (3)$$

where a constant A represents the light emission rate, a percentage (%) of the beam emitted from the light guide 3 on per unit length basis (the unit length is equivalent to the thickness d of the light guide) on the light exit surface 33 in the X direction perpendicular to the light incident end surface 31. A logarithm of the light intensity of the beam emitted from the light exit surface 23 is taken as the ordinate and (L/d) is taken as the abscissa. Those relations are plotted, making it possible to calculate the light emission rate A on the basis of the slope.

Incidentally, according to the present invention, instead of or along with the light outgoing mechanism formed on the light exit surface 33 in the above-mentioned manner, the directive light outgoing mechanism may be provided by mixing and dispersing light-diffusing particles inside the light guide.

The back surface 34, or the primary surface, that does not have the directive light outgoing mechanism is regarded as an elongated prism formed surface where many elongated prisms are arrayed along a direction crossing the light incident end surface 31, which is more specifically a direction (X direction) substantially perpendicular to the light incident end surface 31, in order to control the directivity of the outgoing beam from the light guide 3 on the plane (YZ plane) parallel to the primary light source 1. The arraying pitch of the elongated prisms on the back surface 34 of the light guide 3 is, for example, in the range of 10 to 100 $\mu$m, and preferably in the range of 30 to 60 $\mu$m. Moreover, the apex angle of the elongated prisms on the back surface 34 of the light guide 3 is, for example, in the range of 85 to 110 degrees. When the apex angle is set in this range, the outgoing beam from the light guide 3 is appropriately converged, making it possible to improve the luminance of the surface light source device. The apex angle is more preferably in the range of 90 to 100 degrees.

The prism sheet 4 is disposed on the light exit surface 33 of the light guide 3. The prism sheet 4 is made from a sheet-like light-transmitting member. Two primary surfaces of the prism sheet 4 are a first surface 41 and a second surface 42. The first surface 41 and the second surface 42 are disposed parallel to each other as a whole, and, as a whole, each of the surfaces 41 and 42 is positioned parallel to the XY plane. The first surface 41, one of the primary surfaces (the primary surface positioned so as to face the light exit surface 33 of the light guide 3), is regarded as a light entering surface, while the other primary surface 42 is regarded as a light exiting surface. The light entering surface 41 is regarded as an elongated prism formed surface where a plurality of elongated prisms extending in the Y direction are arrayed parallel to each other. The light exiting surface 42 is regarded as a flat plane.

FIG. 4 schematically illustrates how the beam is deflected within the XZ plane by the prism sheet 4. In this diagram, an example is provided as to a traveling direction of a peak light ray (which corresponds to a peak of the outgoing beam distribution) emitted from the light guide 3 within the XZ plane. Most of the peak light rays diagonally emitted from the light exit surface 33 of the light guide 3 at the angle α enters a first prism face 411a of an elongated prism 411. Subsequently, most of the peak light rays are internally reflected by a second prism face 411b, and then travels substantially in the direction of a normal line of the light exiting surface 42 before being emitted from the light exiting surface 42. The FWHM of the distribution of the beam is substantially at the same level as that of the outgoing beam distribution from the light guide, and less than or equal to 40 degrees, or, for example, in the range of 10 to 40 degrees. Moreover, within the YZ plane, thanks to the effect of the above elongated prism on the back surface 43 of the light guide, the luminance can be substantially improved in the direction of the normal line of the light exiting surface 42 in a wide-ranging area.

Incidentally, the shape of the prism faces 411a and 411b of the elongated prism 411 of the prism sheet 4 is not limited to a uniform flat plane. The shape of the prism faces 411a and 411b may be a polygonally convex in cross section or a curved convex, which help improve the luminance further and narrow the field of vision.

As for the prism sheet 4, in order to precisely form the desired shape of the elongated prism, obtain the stable optical capacity or performance, and prevent abrasion and deformation of the apex section of the elongated prism during assembling or when the light source device is used, an apex flat section or an apex curving section may be formed on the apex section of the elongated prism. In this case, the width of the apex flat section or apex curving section should be preferably less than or equal to 3 μm in order to stop a reduction in the luminance of the surface light source device or reduce the uneven patterns of luminance caused by the sticking phenomenon. The width of the apex flat section or apex curving section should be more preferably less than or equal to 2 μm, and even more preferably less than or equal to 1 μm.

The primary light source 1 is a linear light source extending in the Y direction. For example, the primary light source 1 includes a fluorescent lamp and a cold-cathode tube. In this case, as shown in FIG. 1, in addition to the primary light source 1 disposed so as to face one side end surface of the light guide 3, another primary light source may be disposed so as to face the other side end surface of the light guide 3 when needed.

The light source reflector 2 directs the beam emitted from the primary light source 1 to the light guide 3 while ensuring that the loss of the beam is small. The material of the light source reflector 2, for example, includes a plastic film whose surface is equipped with an evaporated metal reflector layer. As shown in the diagram, the light source reflector 2 is wound such that the light source reflector 2 avoids the prism sheet 4 and extends from the outer surface of the side edge section of the light-reflecting element 5 to the side edge section of the light exit surface of the light guide 3 via the outer surface of the primary light source 1. Alternatively, the light source reflector 2 may be wound such that the light source reflector 2 extends from the outer surface of the side edge section of the light-reflecting element 5 to the side edge section of the light exiting surface of the prism sheet 4 via the outer surface of the primary light source 1. A reflective member that is similar to the light source reflector 2 can be attached to side end surfaces other than that of the light incident end surface 31 of the light guide 3.

The light-reflecting element 5, for example, includes a plastic sheet whose surface is equipped with an evaporated metal reflector layer. According to the present invention, in place of the reflective sheet, a light reflective layer formed by metal deposition or the like on the back surface 34 of the light guide 3, and the like may be used as the light-reflecting element 5.

According to the present embodiment, the surface light source device makes use of the internal reflection at the prism face of the elongated prism formed on the light entering surface 41 of the prism sheet 4. Therefore, the directivity of the beam emitted from a light emitting plane of the surface light source device is high. Based on this fact, the FWHM of the distribution of the beam emitted from the display surface of the liquid crystal display device is, for example, less than or equal to 40 degrees, preferably less than or equal to 30 degrees, and more preferably less than or equal to 25 degrees. The display device with such high directivity tends to have strong glare (speckle). However, according to the present embodiment, the use of the antiglare film 100 can efficiently prevent such glare. That is, the antiglare film of the present invention can effectively prevent glare on the display device having high directivity with the FWHM of the incident beam distribution less than or equal to 40 degrees.

According to the above embodiment, the antiglare film is formed only on one primary surface of the light-transmitting substrate 101 by attaching the light-transmitting thin film 102 to the primary surface. However, according to the present invention, the antiglare films may be formed on both primary surfaces of the light-transmitting substrate 101 by attaching the light-transmitting thin films 102 to the primary surfaces.

**Examples**

Hereinafter, examples of the present invention will be described in detail.

[Example 1]

The peripheral surface of a roll-shaped iron member with a diameter of 200 mm and length of 600 mm was plated with copper so that the thickness of the plated copper was 300 $\mu$m, and was then plated with nickel to protect the copper against oxidation. The obtained roll-shaped member was rotated around a rotational shaft with a step of 10 degrees and then stopped. Each time the member was stopped, the blasting process was carried out by discharging the blast particles from the blast nozzle 104 as described above with reference to FIG. 2. In the blasting process, the blast nozzle whose discharge opening had a diameter of 8 mm was disposed 220 mm away from the surface of the roll-shaped member, and discharged a powder of ball-shaped ceramic beads with the mean diameter of 15 to 20 $\mu$m and the upper-limit diameter of 21 $\mu$m toward the rotational center of the roll-shaped member. The discharging pressure of the blast particles was 0.2 MPa. Therefore, the roll-shaped die whose peripheral surface was equipped with the finely roughened structure was obtained.

Then, as described above with reference to FIG. 3, the roll-shaped die and the rubber nip roll were disposed side by side and parallel to each other. A light-transmitting substrate made from PET film (whose trade name is A4300, produced by TOYOBO CO., LTD.) with thickness of 188 $\mu$m was supplied to between the roll-shaped die and the rubber nip roll along the roll-shaped die. The light-transmitting substrate was nipped between the rubber nip roll and the roll-shaped die by an air pressure cylinder attached to the rubber nip roll.

On the other hand, the following ultraviolet curing composition was prepared such that the viscosity was 300 mPa · S/25°C:

> Phenoxyethyl acrylate (Viscoat #192 from OSAKA ORGANIC CHEMICAL INDUSTRY, LTD): 50 parts by weight
> Bisphenol A-diepoxy-acrylate [Epoxy ester 3000A from Kyoeisha Yushi Kagaku Kogyo Co., Ltd.]: 50 parts by weight
> 2-hydroxy-2-methyl-1-phenyl-propane-1-one (Darocure 1173, from Ciba-Geigy Ltd): 1.5 parts by weight.

The ultraviolet curing composition was supplied to one surface of the light-transmitting substrate nipped by the rubber nip roll toward the roll-shaped die. While the roll-shaped die was rotated, an ultraviolet ray irradiation device emitted an ultraviolet ray when the ultraviolet curing composition was sandwiched between the roll-shaped die and the light-transmitting substrate, thereby polymerizing and curing the ultraviolet curing composition to transfer the finely roughened structure of the shape transfer surface of the roll-shaped die thereonto. After that, the antiglare film was obtained by separating the film from the roll-shaped die.

As for the obtained antiglare film, the characteristic was measured in a manner described below, and the visual evaluation was then carried out. Table 1 below shows the result.

<Method of characteristic measurement and visual evaluation>

> (1) The haze value (Hz), the total light transmittance (Tt) and the diffuse transmittance (Dfs) were measured by a haze meter NDH2000 (manufactured by NIPPON DENSHOKU INDUSTRIES CO., LTD.) according to JIS K7361-1, K7105, and K7136.

> (2) The surface concave-and-convex pitch (Sm), the local-peak average spacing (S), the arithmetic mean deviation of the profile (Ra), the ten-point height of irregularities (Rz), and the arithmetic average inclination angle (R$\Delta$a) were measured by stylus roughness meter SURFCOM1400LCD (manufactured by TOKYO SEIMITSU CO., LTD.) according to JIS B0601:'94 and B0031:'94. Incidentally, with the coordinate of the measurement direction of the stylus roughness meter being regarded as x, the arithmetic average inclination angle (R$\Delta$a) can be calculated from the obtained roughness curve function g(x) using the following equation (4):

$$R\Delta a = \tan^{-1}\left|(1/L)\int_0^L \left|(d/dx)g(x)\right|dx\right| \quad ...(4)$$

where L represents a measurement length.

(3) For the measurement of the rate of normal luminance reduction, a 14.1-inch high-directivity surface light source device was prepared. The FWHM of the device was 17 degrees, an outgoing beam peak angle was positioned within the range of $\pm 0.5$ degrees with respect to a normal line (0 degrees), and the device had a single peak outgoing beam distribution characteristic. The produced antiglare film described above was put on the high-directivity surface light source device. The normal luminance measured before the antiglare film was put was regarded as a reference for calculating the rate of normal luminance reduction ($\alpha$). BM7, manufactured by TOPCON CORPORATION, was used as an optical receiver for measuring the luminance.

(4) The visual evaluation of the antiglare capability was carried out by attaching the antiglare film to a 150 x 150 mm flat plate of acrylate resin and observing projection from a 40-Watt cylindrical fluorescent lamp positioned 2000 mm above the flat plate in substantially the normal direction. The antiglare capability was determined based on how well the outline of the fluorescent lamp was visually confirmed.

(5) As for glare, the antiglare film was put on the high-directivity surface light source device used in the above (3), and the degree of glare was visually confirmed in a dark room for evaluation.

(6) As for the defect hiding capability, evaluation was carried out in a manner described below. A prism sheet not having the light-transmitting thin film was placed on a light exit surface of a 15-inch light guide which was made of acrylate resin and which had an end surface on which a cold-cathode tube was disposed, such that the elongated prism formed surface of the prism sheet faced downward. The end surfaces and the back surface of the light guide were covered with a reflective sheet. As a result, a surface light source device was obtained. A chart (with thickness of 1.5 mm) on which a striped pattern having a variety of spatial frequencies was formed was placed on a flat surface of the prism sheet at the opposite side with respect to the elongated prism formed surface, or on the primary surface of the light-transmitting substrate, such that a surface having the striped pattern faced downward. Moreover, the above light-diffusing optical film was placed on the chart, such that a surface having the finely roughened structure faced upward. Here, as for the striped pattern, a combination of a white line and a black line is regarded as one line pair. How many line pairs are located in the width of 1 mm is represented as spatial frequencies. When the striped pattern of the chart was viewed from above the light-diffusing optical film, examination was carried out as to how many line pairs or more of the striped pattern were not visually identified. Then, the degree of hiding of the light-diffusing optical film was determined based on the number of the line pairs. The unit is 1p/mm. The smaller the value is, the higher the hiding capability of the optical film is.

[Examples 2 to 5]

The finely roughened structure was formed on the peripheral surface of the roll-shaped die, the antiglare film was produced using the ultraviolet curing composition, and the evaluation was carried out in the same way as the above example 1, except that: the blast particles were ball-shaped glass beads whose mean diameter was in the range of 10 to 35 $\mu$m and whose upper-limit diameter was 45 $\mu$m; and the discharging pressure of the blast particles was 0.3 MPa, 0.4 MPa, 0.5 MPa, and 0.6 MPa, respectively. Table 1 below shows the result.

[Example 6]

The antiglare film was produced, and the evaluation was carried out in the same way as the above example 1, except that: the blast particles were ball-shaped glass beads whose mean diameter was in the range of 45 to 75 $\mu$m and whose upper-limit diameter was 106 $\mu$m; and the discharging pressure was 0.4 MPa. Table 1 below shows the result.

[Examples 7 to 10]

The antiglare film was produced in the same way as the above example 1, except that: the blast processing was carried out for a roll-shaped die which was not plated with nickel; and the conditions of blasting were those described in table 1. Table 1 below shows the mat characteristic and the result of evaluation for the antiglare film obtained.

[Example 11]

The peripheral surface of a roll-shaped iron member with a diameter of 200 mm and length of 600 mm was plated with copper so that the thickness of the plated copper was 300 $\mu$m, and was then plated with nickel to protect the copper against oxidation. The obtained roll-shaped member was continuously rotated around a rotational shaft at the speed of 20 times per minute. While the roll-shaped member was being rotated, the blasting process was carried out by discharging the blast particles from the blast nozzle 104 as described above with reference to FIG. 2. In the blasting process, the blast nozzle whose discharge opening had a diameter of 8 mm was disposed 220 mm away from the surface of the roll-shaped member, and discharged a powder of ball-shaped ceramic beads with the mean diameter of 15 to 20 $\mu$m and the upper-limit diameter of 41 $\mu$m toward the rotational center of the roll-shaped member. The discharging pressure of the blast particles was 0.1 MPa. Therefore, the roll-shaped die whose peripheral surface was equipped with the finely roughened structure was obtained. Using the roll-shaped die, the antiglare film was made in the same way as the example 1. Then, the evaluation was carried out. Table 1 shows the result.

[Examples 12 to 20]

The finely roughened structure was formed on the peripheral surface of the roll-shaped die, the antiglare film was produced using the ultraviolet curing composition, and the evaluation was carried out in the same way as the above example 1, except that the distance between the roll-shaped member and the blast nozzle was set as shown in table 1. Table 1 shows the result.

[Comparative Example 1]

The antiglare film was produced, and the evaluation was carried out in the same way as the above example 1, except that: the blast particles were ball-shaped glass beads whose mean diameter was in the range of 45 to 75 $\mu$m and whose upper-limit diameter was 106 $\mu$m; and the discharging pressure was 0.5 MPa. Table 1 below shows the result.

[Comparative Example 2]

In order to obtain the finely roughened structure, a coating solution was prepared by dissolving the acrylate-based diffusing particles with the average diameter of 5 $\mu$m and a binder resin in toluene/MEX = 60/40 (weight ratio) solvent mixture. Subsequently, the coating solution was gravure-coated on a PET substrate film. Then, the solvent was removed by drying. As a result, the antiglare film whose surface is equipped with the finely roughened structure in the thickness of 6 $\mu$m was obtained. The binder resin was a polyester polyol/isocyanate-based blended resin (VYLON200). The acrylate-based diffusing particles (manufactured by Soken Chemical & Engineering Co., Ltd.) and the binder resin were mixed in the ratio of 5:95, and used as total solid content. The solid content concentration was adjusted to be 20% of the coating solution.

The evaluation was carried out for the antiglare film produced in the above coating processing method in the same way as the example 1. Table 1 below shows the result.

[Table 1]

EP 2 093 592 A1

| | Mean diameter of blast particles (μm) | Upper-limit diameter of blast particles (μm) | Blasting distance (mm) | Rotational-shaft step angle (deg) | Blast discharging pressure (MPa) | Haze value Hz | Total light transmittance Tt (%) | Diffuse transmittance Dfs (%) | Surface concave-and-convex pitch Sm (μm) | Local-peak average spacing S (μm) | Arithmetic mean deviation of the profile Ra (μm) | Ten-point height of irregularities Rz (μm) | Average inclination angle RΔa (deg) | Rate of normal brightness reduction α (%) | Visual evaluation of antiglare capability | State of glare when a film is on a liquid crystal pannel |
|---|---|---|---|---|---|---|---|---|---|---|---|---|---|---|---|---|
| Example 1 | 15–20 | 21 | 220 | 10 | 0.20 | 30.0 | 93.0 | 28.0 | 28.5 | 11.1 | 0.080 | 0.590 | 1.998 | 11.9 | The positional existance of a fluorescent lamp was slightly recognizable, but the outline of the shape was obscure in the shape of a large ellipse, and it was difficult to visually confirm projection. | Glare was not visually confirmed at all. |
| Example 2 | 10–35 | 45 | 220 | 10 | 0.30 | 35.0 | 92.0 | 31.6 | 39.0 | 16.9 | 0.129 | 0.798 | 2.392 | 13.7 | The outline of the shape of a fluorescent lamp was obscure in the shape of a large ellipse, and it was more difficult to visually confirm projection than Example 1. | Glare was not visually confirmed at all. |
| Example 3 | 10–35 | 45 | 220 | 10 | 0.40 | 39.7 | 92.2 | 36.6 | 47.2 | 18.4 | 0.175 | 1.052 | 2.860 | 14.8 | The outline of the shape was obscure in the shape of a large ellipse, and it was more difficult to visually confirm projection than Example 2. | Glare was not visually confirmed at all. |
| Example 4 | 10–35 | 45 | 220 | 10 | 0.50 | 46.5 | 92.5 | 43.0 | 49.2 | 20.8 | 0.214 | 1.336 | 3.223 | 16.1 | The outline of a fluorescent lamp was obscure and was hardly recognizable; it was more difficult to visually confirm projection than Example 3. | Glare was not visually confirmed at all. |
| Example 5 | 10–35 | 45 | 220 | 10 | 0.60 | 49.6 | 92.8 | 46.0 | 54.7 | 22.2 | 0.245 | 1.431 | 3.370 | 16.5 | The outline of a fluorescent lamp was not confirmed at all; projection was not visually confirmed at all. | Glare was not visually confirmed at all. |
| Example 6 | 45–75 | 106 | 220 | 10 | 0.40 | 54.4 | 92.3 | 50.2 | 64.4 | 32.6 | 0.334 | 1.926 | 3.235 | 16.0 | There was no outline of a fluorescent lamp; projection was not confirmed. | A small amount of glare was visually confirmed, but the glare was very weak. |
| Example 7 | 15–20 | 41 | 220 | 5 | 0.10 | 42.8 | 92.4 | 39.6 | 30.9 | 12.3 | 0.088 | 0.486 | 2.411 | 15.5 | The antiglare capability was at the same level as Example 1. | Glare was visually confirmed at all. |
| Example 8 | 15–20 | 41 | 220 | 2 | 0.10 | 47.9 | 93.0 | 44.5 | 25.8 | 12.1 | 0.111 | 0.607 | 3.111 | 15.2 | The antiglare capability was at the same level as Example 1. | Glare was not visually confirmed at all. |
| Example 9 | 15–20 | 41 | 220 | 0.72 | 0.10 | 48.1 | 92.2 | 44.4 | 27.0 | 12.9 | 0.130 | 0.691 | 3.348 | 16.2 | The antiglare capability was at the same level as Example 2. | Glare was not visually confirmed at all. |
| Example 10 | 15–20 | 41 | 220 | 0.36 | 0.10 | 44.9 | 91.9 | 41.3 | 32.0 | 13.9 | 0.114 | 0.592 | 2.676 | 15.9 | The level of the antiglare capability was between those of Examples 2 and 3. | Glare was not visually confirmed at all. |
| Example 11 | 15–20 | 41 | 220 | continuous | 0.10 | 37.7 | 90.9 | 34.3 | 26.3 | 13.1 | 0.141 | 0.702 | 3.333 | 17.6 | The antiglare capability was at the same level as Example 2. | Glare was not visually confirmed at all. |
| Example 12 | 15–20 | 41 | 245 | continuous | 0.10 | 32.9 | 90.6 | 29.8 | 25.3 | 12.7 | 0.115 | 0.593 | 2.874 | 15.6 | The antiglare capability was at the same level as Example 1. | Glare was not visually confirmed at all. |
| Example 13 | 15–20 | 41 | 270 | continuous | 0.10 | 24.3 | 90.3 | 21.9 | 28.1 | 12.7 | 0.087 | 0.459 | 2.188 | 13.5 | The antiglare capability was at the same level as Example 1. | Glare was not visually confirmed at all. |
| Example 14 | 15–20 | 41 | 295 | continuous | 0.10 | 15.5 | 90.2 | 14.0 | 28.6 | 13.3 | 0.069 | 0.399 | 1.913 | 10.9 | The antiglare capability was at the same level as Example 1. | Glare was not visually confirmed at all. |
| Example 15 | 15–20 | 41 | 320 | continuous | 0.10 | 12.1 | 90.2 | 10.9 | 30.1 | 13.0 | 0.054 | 0.324 | 1.599 | 10.1 | The positional existance of a fluorescent lamp was recognizable, but the outline of the shape was obscure, and the effect of a reduction of projection was observed. | Glare was visually confirmed at all. |
| Example 16 | 15–20 | 41 | 345 | continuous | 0.10 | 11.0 | 90.6 | 9.9 | 32.9 | 13.0 | 0.047 | 0.305 | 1.472 | 9.1 | The antiglare capability was weaker than Example 14, but the effect of a reduction of projection was observed. | Glare was visually confirmed at all. |
| Example 17 | 15–20 | 41 | 370 | continuous | 0.10 | 8.1 | 90.5 | 7.4 | 34.2 | 13.4 | 0.037 | 0.248 | 1.236 | 8.8 | The antiglare capability was weaker than Example 15, but the effect of a reduction of projection was observed. | Glare was not visually confirmed at all. |
| Example 18 | 15–20 | 41 | 395 | continuous | 0.10 | 6.3 | 90.4 | 5.7 | 37.4 | 12.5 | 0.031 | 0.214 | 1.117 | 8.5 | The antiglare capability was weaker than Example 16, but the effect of a reduction of projection was observed. | Glare was not visually confirmed at all. |
| Example 19 | 15–20 | 41 | 420 | continuous | 0.10 | 5.0 | 90.5 | 4.5 | 34.6 | 12.0 | 0.025 | 0.188 | 1.034 | 8.1 | The antiglare capability was weaker than Example 17, but the effect of a reduction of projection was observed. | Glare was not visually confirmed at all. |
| Example 20 | 15–20 | 41 | 470 | continuous | 0.10 | 3.5 | 90.2 | 3.1 | 30.8 | 10.0 | 0.020 | 0.138 | 0.951 | 7.4 | The antiglare capability was weaker than Example 18, but the effect of a reduction of projection was observed. | Glare was not visually confirmed at all. |
| Comparative Example 1 | 45–75 | 106 | 220 | 10 | 0.50 | 62.5 | 92.7 | 57.9 | 76.4 | 39.7 | 0.432 | 2.472 | 3.372 | 17.3 | There was observed no outline of a fluorescent lamp; projection was not confirmed. | A small amount of glare was visually confirmed, but the glare was very weak. |
| Comparative Example 2 | Coating method | | | | | 36.7 | 92.8 | 34.0 | 96.8 | 61.1 | 0.539 | 2.888 | 3.754 | 17.9 | The shape of a fluorescent lamp appeared obscurely in the shape of an ellipse. | Strong glare was visually confirmed |

The following further describes the light diffusing films of the present invention in detail with examples.

[Example 21]

<Evaluation Method>

(1) As for the haze value (Hz), the total light transmittance (Tt) and the diffuse transmittance (Dfs), the method here is the same as the above.

(2) As for the surface concave-and-convex pitch (Sm), the local-peak average spacing (S), the arithmetic mean deviation of the profile (Ra), the ten-point height of irregularities (Rz), and the arithmetic average inclination angle (R$\Delta$a), the method here is the same as the above.

(3) Glare evaluation: A 14.1-inch totally reflecting prism sheet M268YK (manufactured by MITSUBISHI RAYON CO., LTD.) was placed on a light exit surface of a 15-inch light guide which was made of acrylate resin and which had an end surface on which a cold-cathode tube was disposed, such that the elongated prism formed surface of the prism sheet faced downward. The end surfaces and the back surface of the light guide were covered with a reflective sheet. As a result, a surface light source device was obtained. As for the obtained surface light source device, the FWHM was 17 degrees, the outgoing beam peak angle was positioned within the range of $\pm0.5$ degrees with respect to a normal line (0 degree). The surface light source device also had a single peak outgoing beam distribution characteristic. The produced light diffusing film was put on the surface light source device. The degree of glare was visually confirmed in a dark room for evaluation. Moreover, the rate of normal luminance reduction ($\alpha$) was evaluated using BM7 (manufactured by TOPCON CORPORATION). Incidentally, as for those whose back surfaces were provided with a plurality of elongated lenses (Examples 53 to 84), the visual evaluation of glare was carried out with the light diffusing film having elongated lens formed surface, instead of the above M268YK, placed on the 14.1-inch light guide. The light diffusing film having elongated lens formed surface was manufactured in the respective example.

(4) Defect hiding capability:

A chart (with thickness of 1. 5 mm) on which a striped pattern having a variety of spatial frequencies was formed was placed on a flat surface of the prism sheet of the surface light source device of (3) at the opposite side with respect to the elongated prism formed surface, or on the primary surface of the light-transmitting substrate, such that a surface having the striped pattern faced downward. Moreover, the above light-diffusing optical film was placed on the chart, such that a surface having the finely roughened structure faced upward. Here, as for the striped pattern, a combination of a white line and a black line is regarded as one line pair. How many line pairs are located in the width of 1 mm is represented as spatial frequencies. When the striped pattern of the chart was viewed from above the light-diffusing optical film, examination was carried out as to how many line pairs or more of the striped pattern were not visually identified. Then, the degree of hiding of the light-diffusing optical film was determined based on the number of the line pairs. The unit is lp/mm. The smaller the value is, the higher the hiding capability of the optical film is.

<Production of samples>

The peripheral surface of an iron core with a diameter of 200 mm and length of 730 mm was plated with copper so that the thickness of the plated copper was 300 $\mu$m, and was then plated with nickel to protect the copper against oxidation. The obtained roll-shaped die was rotated around a rotational shaft with a step of 10 degrees. Each time the rotation of the roll-shaped die was stopped, the blasting process was carried out. In the blasting process, as shown in table 2, the blast nozzle whose discharge opening had a diameter of 8 mm was disposed 220 mm away from the surface of the roll-shaped die, and discharged abrasive materials toward the rotational center of the roll-shaped die with the discharging pressure of 0.2 MPa for processing. The abrasive materials were ball-shaped ceramic beads (#1000) with the mean diameter of 15 to 20 $\mu$m and the upper-limit diameter of 41 $\mu$m. Discharging the abrasive materials at the whole surface of the die produced the roll-shaped die having the finely roughened formation.

Then, the roll-shaped die and the rubber nip roll were disposed side by side and parallel to each other. A light-transmitting substrate made from PET film (whose trade name is A4300, produced by TOYOBO CO., LTD.) with thickness of 188 $\mu$m was supplied to between the roll-shaped die and the rubber nip roll along the roll-shaped die. The light-transmitting substrate was nipped between the rubber nip roll and the roll-shaped die by an air pressure cylinder attached to the rubber nip roll.

On the other hand, the following ultraviolet curing composition was mixed with 10 parts by weight of silicone particles (Tospearl 130, manufactured by Toshiba Silicone Co., Ltd) whose difference in refractive index from the ultraviolet curing resin was 0.08 and whose diameter was 3 $\mu$m, and was prepared such that the viscosity was 300 mPa · S/25°C:

Phenoxyethyl acrylate (Viscoat #192, produced by OSAKA ORGANIC CHEMICAL INDUSTRY, LTD): 50 parts by weight
Bisphenol A-diepoxy-acrylate [Epoxy ester 3000A, manufactured by Kyoeisha Yushi Kagaku Kogyo Co., Ltd.]: 50 parts by weight
2-hydroxy-2-methyl-1-phenyl-propane-1-one (Darocure 1173, manufactured by Ciba-Geigy Ltd): 1.5 parts by weight.

The ultraviolet curing composition was supplied to one surface of the light-transmitting substrate nipped by the rubber roll toward the roll-shaped die. While the roll-shaped die was rotated, an ultraviolet ray irradiation device emitted an ultraviolet ray when the ultraviolet curing composition was sandwiched between the roll-shaped die and the light-transmitting substrate, thereby polymerizing and curing the ultraviolet curing composition to transfer the roughened structure of the shape transfer surface of the roll-shaped die thereonto. After that, the light diffusing film was obtained by separating the film from the roll-shaped die. Table 2 shows the mat characteristic and the result of evaluation of the light diffusing film.

[Examples 22 to 29]

The light diffusing film was produced in the same way as the above example 21, except that: for the blast processing, the ball-shaped glass beads with the mean diameter of 10 to 35 $\mu$m and the upper-limit diameter of 45 $\mu$m were used; and the blast distance and the blast discharging pressure were set as shown in table 2. Table 2 shows the mat characteristic and the result of evaluation of the produced light diffusing film.

[Examples 30 to 44]

The light diffusing film was produced in the same way as the above example 21, except that: for the blast processing, the mean diameter of particles, the upper-limit diameter of particles, the blast distance, the step angle around the rotational shaft, and the blast discharging pressure were set as shown in table 2; and the roll-shaped member was not plated with the above nickel. Table 2 shows the mat characteristic and the result of evaluation of the produced light diffusing film.

[Example 45]

The peripheral surface of a roll-shaped iron member with a diameter of 200 mm and length of 600 mm was plated with copper so that the thickness of the plated copper was 300 $\mu$m, and was then plated with nickel to protect the copper against oxidation. The obtained roll-shaped member was continuously rotated around a rotational shaft at the speed of 20 times per minute. While the roll-shaped member was being rotated, the blasting process was carried out by discharging the blast particles from the blast nozzle 104 as described above with reference to FIG. 1. In the blasting process, the blast nozzle whose discharge opening had a diameter of 8 mm was disposed 320 mm away from the surface of the roll-shaped member, and discharged a powder of ball-shaped ceramic beads with the mean diameter of 10 to 42 $\mu$m and the upper-limit diameter of 63 $\mu$m toward the rotational center of the roll-shaped member. The discharging pressure of the blast particles was 0.1 MPa. Therefore, the roll-shaped die whose peripheral surface was equipped with the finely roughened structure was obtained. Using the roll-shaped die, the light diffusing film was made in the same way as the example 21, except that the silicone particles were not used. Then, the evaluation was carried out. Table 2 shows the result.

[Examples 46 to 52]

The light diffusing film was produced in the same way as the above example 45, except that for the blast processing, the mean diameter of particles, the upper-limit diameter of particles, the blast distance and the blast discharging pressure were set as shown in table 2. Table 2 shows the mat characteristic and the result of evaluation of the produced light diffusing film.
Incidentally, the defect hiding capability of the example 49 was 6.3 [lp/mm], and the defect hiding capability of the example 52 was 18.0 [lp/mm].

[Comparative Example 3]

The light diffusing film was produced in the same way as the above example 26, except that for the blast processing, the ball-shaped glass beads with the mean diameter of 10 to 42 $\mu$m and the upper-limit diameter of 63 $\mu$m were used. Table 2 shows the mat characteristic and the result of evaluation of the produced light diffusing film.

[Comparative Example 4]

The light diffusing film was produced in the same way as the above example 49, except that for the blast processing, the ball-shaped glass beads with the mean diameter of 45 to 75 $\mu$m and the upper-limit diameter of 106 $\mu$m were used. Table 2 shows the mat characteristic and the result of evaluation of the produced light diffusing film.

[Comparative Example 5]

A coating solution was prepared by dissolving the acrylate-based diffusing particles with the average diameter of 5 $\mu$m and a binder resin in toluene/MEX = 60/40 (weight ratio) solvent mixture. Subsequently, the coating solution was gravure-coated on a PET substrate film. Then, the solvent was removed by drying to obtain the film having the finely roughened structure with thickness of 6 $\mu$m. The binder resin was a polyester polyol/isocyanate-based blended resin (VYLON200). The acrylate-based diffusing particles (manufactured by Soken Chemical & Engineering Co., Ltd.) and the binder resin were mixed in the ratio of 87:13, and used as total solid content. The solid content concentration was adjusted to be 20% of the coating solution.
The evaluation was carried out in the same way as the example 21, except that the light diffusing film produced in the above coating processing method was used as a sample. Table 2 shows the characteristic and the result of evaluation of the produced light diffusing film.

[Examples 53 to 84]

The light diffusing films were produced by providing the back surfaces of all the light diffusing films of Examples 21 to 52 with a lot of elongated prisms disposed parallel to each other. The method of providing the elongated prisms .was the same as the method of shape transfer using the ultraviolet curing resin for producing the above light diffusing film. The roll-shaped die used here was produced by cutting the peripheral surface of the roll-shaped member in the direction of the rotational shaft thereof with the use of a diamond cutter whose cross section is a triangle with the apex angle of 68 degrees, to thereby form a lot of elongated prisms with the pitch of 50 $\mu$m each extending in the direction of the rotational shaft of the roll-shaped die.
The 14.1-inch backlight was constructed using the produced light diffusing film, and the visual evaluation of glare was carried out in a dark room. As for all the samples, the result of evaluation was substantially the same as the result of glare evaluation of the light diffusing films of the above Examples 21 to 44. Accordingly, the diffusing films equipped with the elongated lenses with no glare were produced.
[Table 2]

| | Mean diameter of blast particles (μm) | Upper-limit diameter of blast particles (μm) | Blasting distance (mm) | Rotiational-shaft step angle (deg) | Blast discharging pressure (MPa) | Haze value Hz | Total light transmittance Tt (%) | Diffuse transmittance Dfs (%) | Surface concave-and-convex pitch Sm (μm) | Local-peak average spacing S (μm) | Arithmetic mean deviation of the profile Ra (μm) | Ten-point height of irregularities Rz (μm) | Average inclination angle RΔa (deg) | Rate of normal brightness reduction α (%) | Placed on a directive surface light source |
|---|---|---|---|---|---|---|---|---|---|---|---|---|---|---|---|
| Example 21 | 15–20 | 41 | 220 | 10 | 0.30 | 27.9 | 92.0 | 25.3 | 30.8 | 14.5 | 0.069 | 0.519 | 1.929 | 12.2 | Glare was not visually confirmed at all. |
| Example 22 | 10–35 | 45 | 220 | 10 | 0.30 | 35.0 | 92.0 | 31.6 | 39.0 | 16.9 | 0.120 | 0.798 | 2.392 | 13.7 | Glare was not visually confirmed at all. |
| Example 23 | 10–35 | 45 | 220 | 10 | 0.40 | 39.7 | 92.2 | 36.6 | 47.2 | 18.4 | 0.175 | 1.052 | 2.860 | 14.8 | Glare was not visually confirmed at all. |
| Example 24 | 10–35 | 45 | 220 | 10 | 0.50 | 46.5 | 92.5 | 43.0 | 49.2 | 20.8 | 0.214 | 1.336 | 3.223 | 16.1 | Glare was not visually confirmed at all. |
| Example 25 | 10–35 | 45 | 220 | 10 | 0.60 | 49.6 | 92.8 | 46.0 | 54.7 | 22.2 | 0.245 | 1.431 | 3.370 | 16.5 | Glare was not visually confirmed at all. |
| Example 26 | 10–35 | 45 | 120 | 10 | 0.30 | 46.8 | 92.6 | 43.3 | 56.8 | 21.1 | 0.270 | 1.533 | 3.873 | 14.5 | Glare was not visually confirmed at all. |
| Example 27 | 10–35 | 45 | 120 | 10 | 0.40 | 51.0 | 92.8 | 47.3 | 74.5 | 34.2 | 0.323 | 1.777 | 3.773 | 15.6 | Glare was not visually confirmed at all. |
| Example 28 | 10–35 | 45 | 120 | 10 | 0.50 | 56.2 | 92.6 | 52.1 | 64.4 | 24.0 | 0.326 | 1.827 | 3.843 | 16.1 | Glare was not visually confirmed at all. |
| Example 29 | 10–35 | 45 | 120 | 10 | 0.60 | 60.1 | 93.7 | 56.3 | 67.9 | 26.3 | 0.415 | 2.270 | 4.576 | 17.3 | Only a little amount of glare was visually confirmed. |
| Example 30 | 15–20 | 41 | 220 | 5 | 0.10 | 42.8 | 92.4 | 39.6 | 30.9 | 12.3 | 0.088 | 0.486 | 2.411 | 15.5 | Glare was not visually confirmed at all. |
| Example 31 | 15–20 | 41 | 220 | 2 | 0.10 | 47.9 | 93.0 | 44.5 | 25.8 | 12.1 | 0.111 | 0.607 | 3.111 | 15.2 | Glare was not visually confirmed at all. |
| Example 32 | 15–20 | 41 | 220 | 0.72 | 0.10 | 48.1 | 92.2 | 44.4 | 27.0 | 12.9 | 0.130 | 0.691 | 3.348 | 16.2 | Glare was not visually confirmed at all. |
| Example 33 | 15–20 | 41 | 220 | 0.36 | 0.10 | 44.9 | 91.9 | 41.3 | 32.0 | 13.9 | 0.114 | 0.592 | 2.676 | 15.9 | Glare was not visually confirmed at all. |
| Example 34 | 15–20 | 41 | 220 | 5 | 0.15 | 53.0 | 92.8 | 49.2 | 25.1 | 11.9 | 0.137 | 0.735 | 3.737 | 17.7 | Glare was not visually confirmed at all. |
| Example 35 | 15–20 | 41 | 220 | 2 | 0.15 | 62.7 | 93.3 | 58.5 | 28.5 | 14.2 | 0.187 | 0.928 | 4.173 | 18.3 | Glare was not visually confirmed at all. |
| Example 36 | 15–20 | 41 | 220 | 0.36 | 0.15 | 58.3 | 92.7 | 54.1 | 32.7 | 15.6 | 0.204 | 0.969 | 4.032 | 18.0 | Glare was not visually confirmed at all. |
| Example 37 | 15–20 | 41 | 220 | 5. | 0.20 | 67.8 | 93.8 | 63.6 | 27.1 | 13.4 | 0.217 | 1.081 | 5.093 | 21.7 | Glare was not visually confirmed at all. |
| Example 38 | 15–20 | 41 | 220 | 2 | 0.20 | 69.0 | 93.8 | 64.7 | 30.1 | 14.8 | 0.228 | 1.115 | 4.870 | 22.0 | Glare was not visually confirmed at all. |
| Example 39 | 15–20 | 41 | 220 | 3 | 0.10 | 37.3 | 92.2 | 34.4 | 35.6 | 11.1 | 0.145 | 0.606 | 2.948 | 13.8 | Glare was not visually confirmed at all. |
| Example 40 | 15–20 | 41 | 220 | 3 | 0.20 | 57.7 | 93.3 | 53.9 | 27.2 | 13.1 | 0.185 | 0.937 | 4.450 | 18.0 | Glare was not visually confirmed at all. |
| Example 41 | 15–20 | 41 | 220 | 3 | 0.30 | 69.6 | 94.2 | 65.6 | 29.5 | 14.1 | 0.256 | 1.234 | 5.509 | 20.3 | Glare was not visually confirmed at all. |
| Example 42 | 15–20 | 41 | 220 | 3 | 0.40 | 75.2 | 94.9 | 71.4 | 39.2 | 16.2 | 0.358 | 1.550 | 6.138 | 22.9 | Glare was not visually confirmed at all. |
| Example 43 | 15–20 | 41 | 220 | 3 | 0.50 | 78.9 | 95.3 | 75.2 | 35.4 | 16.8 | 0.408 | 1.802 | 7.032 | 26.0 | Glare was not visually confirmed at all. |
| Example 44 | 15–20 | 41 | 220 | 3 | 0.60 | 81.0 | 95.1 | 77.1 | 36.8 | 17.8 | 0.443 | 1.931 | 7.309 | 26.0 | Glare was not visually confirmed at all. |
| Example 45 | 10–42 | 63 | 320 | — | 0.10 | 13.2 | 90.2 | 11.9 | 27.6 | 12.4 | 0.071 | 0.391 | 1.971 | 9.5 | Glare was not visually confirmed at all. |
| Example 46 | 10–42 | 63 | 270 | — | 0.10 | 18.2 | 90.1 | 16.4 | 27.1 | 13.5 | 0.093 | 0.462 | 2.127 | 10.2 | Glare was not visually confirmed at all. |
| Example 47 | 10–42 | 63 | 220 | — | 0.10 | 33.1 | 90.3 | 29.8 | 28.1 | 14.8 | 0.149 | 0.697 | 3.052 | 12.2 | Glare was not visually confirmed at all. |
| Example 48 | 10–42 | 63 | 220 | — | 0.20 | 62.0 | 92.5 | 57.4 | 35.2 | 17.8 | 0.297 | 1.321 | 4.981 | 21.5 | Glare was not visually confirmed at all. |
| Example 49 | 10–42 | 63 | 220 | — | 0.30 | 68.9 | 93.2 | 64.2 | 35.8 | 19.4 | 0.373 | 1.606 | 5.776 | 24.3 | Glare was not visually confirmed at all. |
| Example 50 | 10–42 | 63 | 220 | — | 0.40 | 78.5 | 95.0 | 74.6 | 40.5 | 21.4 | 0.519 | 2.123 | 7.108 | 31.6 | Glare was not visually confirmed at all. |
| Example 51 | 10–42 | 63 | 220 | — | 0.50 | 81.3 | 95.6 | 77.7 | 43.1 | 22.3 | 0.602 | 2.448 | 8.045 | 34.6 | Glare was not visually confirmed at all. |
| Example 52 | 45–75 | 106 | 320 | — | 0.10 | 22.2 | 90.6 | 20.1 | 67.6 | 27.3 | 0.132 | 0.693 | 1.876 | 9.9 | Glare was not visually confirmed at all. |
| Comparative Example 3 | 10–42 | 63 | 120 | 10 | 0.30 | 45.9 | 92.8 | 42.6 | 132.6 | 38.0 | 0.863 | 2.751 | 3.852 | 12.6 | A small amount of glare was visually confirmed. |
| Comparative Example 4 | 45–75 | 106 | 220 | — | 0.30 | 75.0 | 93.6 | 70.2 | 82.0 | 40.8 | 0.837 | 3.478 | 5.656 | 29.9 | A small amount of glare was visually confirmed. |
| Comparative Example 5 | Coating method | | | | | 64.8 | 93.5 | 60.6 | 110.6 | 42.1 | 0.703 | 4.143 | 6.447 | 20.1 | Glare was visually confirmed obviously. |

**Claims**

1. An antiglare film comprising a filmy light-transmitting substrate and a light-transmitting thin film attached to a surface of the filmy light-transmitting substrate, which is obtained by:

   supplying an active energy ray curing resin composition to between a roll-shaped die whose peripheral surface is equipped with a finely roughened structure formed by subjecting a peripheral surface of a roll-shaped metallic member to a blasting process and the filmy light-transmitting substrate disposed along the peripheral surface of the roll-shaped die, to thereby keep the active energy ray curing resin composition in a form of a thin film therebetween; and
   transferring the finely roughened structure of the peripheral surface of the roll-shaped die to a surface of the thin film while curing the active energy ray curing resin composition to form the light-transmitting thin film, to thereby attach the light-transmitting thin film having the finely roughened structure to the surface of the filmy light-transmitting substrate,

   wherein the surface of the light-transmitting thin film having the finely roughened structure has an arithmetic average inclination angle of 0.5 to 3.5 degrees.

2. The antiglare film as claimed in claim 1, wherein blast particles for the blasting process are substantially ball-shaped abrasive particles with the mean diameter of 5 to 45 $\mu$m.

3. The antiglare film as claimed in claim 1, wherein blast particles for the blasting process are substantially ball-shaped abrasive particles with the upper-limit diameter of less than or equal to 45 $\mu$m.

4. The antiglare film as claimed in claim 1, wherein the average spacing between local peaks on the surface of the light-transmitting thin film having the finely roughened structure is in the range of 5 to 30 $\mu$m.

5. The antiglare film as claimed in claim 1, wherein the concave-and-convex pitch on the surface of the light-transmitting thin film having the finely roughened structure is in the range of 20 to 60 $\mu$m.

6. The antiglare film as claimed in claim 1, wherein, on the surface of the light-transmitting thin film having the finely roughened structure, the arithmetic mean deviation of the profile is in the range of 0.015 to 0.3 $\mu$m, and the ten-point height of irregularities is in the range of 0.1 to 2 $\mu$m.

7. A display device including a display section, and the antiglare film as claimed in claim 1 disposed in front of the display section, wherein the full width at half maximum of a distribution of a beam entering the antiglare film from the display section is less than or equal to 40 degrees.

8. The display device as claimed in claim 7, wherein the display section includes a light-transmitting display element and an edge-lighting type surface light source device disposed behind the light-transmitting display element, the surface light source device includes a primary light source, a light guide that receives a beam emitted from the primary light source, guides the beam therein and directs the beam to the outside of the light guide, and a light deflection element disposed so as to receive the outgoing beam from the light guide, and the light deflection element is a prism sheet having a light entering surface on which a plurality of elongated prisms are disposed parallel to each other.

9. A light diffusing film obtained by transferring, with use of an active energy ray curing resin, an irregular finely-roughened structure obtained by subjecting a surface of a roll-shaped die to a blasting process to a surface of a transparent substrate and curing a transferred structure,
   wherein an average spacing S between local peaks of the finely roughened structure is in the range of 5 to 30 $\mu$m.

10. The light diffusing film as claimed in claim 9, wherein the irregular finely-roughened structure is obtained by subjecting, with the use of ball-shaped abrasive particles with the mean diameter of 5 to 45 $\mu$m, the surface of the roll-shaped die to the blasting process.

11. The light diffusing film as claimed in claim 9, wherein the irregular finely-roughened structure is obtained by subjecting, with the use of abrasive particles with the upper-limit diameter of less than or equal to 70 $\mu$m, the surface of the roll-shaped die to the blasting process.

**12.** The light diffusing film as claimed in claim 9, wherein the arithmetic average inclination angle RΔa of the finely roughened structure is in the range of 1.5 to 9.0 degrees.

**13.** The light diffusing film as claimed in claim 9, wherein the concave-and-convex pitch Sm of the finely roughened structure is in the range of 20 to 80 $\mu$m.

**14.** The light diffusing film as claimed in claim 9, wherein the arithmetic mean deviation of the profile Ra of the finely roughened structure is in the range of 0.06 to 0.7 $\mu$m, and the ten-point height of irregularities Rz of the finely roughened structure is in the range of 0.5 to 2.5 $\mu$m.

**15.** The light diffusing film as claimed in claim 9, wherein a prism is provided on the back surface of the light diffusing film.

**16.** A surface light source system including a primary light source, a light guide whose end surface receives a beam emitted from the primary light source and which guides the beam therein and directs the beam to an exit surface from which the beam is emitted, and a light diffusing film equipped with a plurality of elongated lenses to deflect the beam from the light guide upward so that the beam rises above the exit surface, and being adapted to dispose a liquid crystal element directly on the light diffusing film,
wherein the light diffusing film is a light diffusing film obtained by transferring, with the use of an active energy ray curing resin, a finely roughened structure obtained by subjecting the surface of the roll-shaped die to the blasting process to the surface of a transparent substrate, and curing the transferred structure, and the average spacing between local peaks S of the finely roughened structure is in the range of 10 to 30 $\mu$m.

# FIG.1

# FIG.2

# FIG.3

# FIG.4

<div align="center">

**INTERNATIONAL SEARCH REPORT**

</div>

| | International application No. |
|---|---|
| | PCT/JP2007/073718 |

A. CLASSIFICATION OF SUBJECT MATTER
*G02B5/02*(2006.01)i, *G02B1/11*(2006.01)i, *G02F1/1335*(2006.01)i

According to International Patent Classification (IPC) or to both national classification and IPC

B. FIELDS SEARCHED

Minimum documentation searched (classification system followed by classification symbols)
G02B5/02, G02B1/11, G02F1/1335

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2006/088206 A1 (Dainippon Printing Co., Ltd.),<br>24 August, 2006 (24.08.06),<br>Par. No. [0023]; Fig. 2; Par. Nos. [0094] to [0097]<br>& WO 2006/088202 A1 & WO 2006/088203 A1 | 1,4,5,9,13<br>2,3,10-12 |
| X<br>Y | JP 2005-227407 A (Daicel Chemical Industries, Ltd.),<br>25 August, 2005 (25.08.05),<br>Claims; Par. Nos. [0036], [0037]<br>(Family: none) | 1,4,5,9,13<br>12 |
| A | JP 2005-331901 A (Sumitomo Chemical Co., Ltd.),<br>02 December, 2005 (02.12.05),<br>Full text; all drawings<br>& US 2005/0063066 A1 | 1-3,10,11 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>28 February, 2008 (28.02.08) | Date of mailing of the international search report<br>25 March, 2008 (25.03.08) |
|---|---|
| Name and mailing address of the ISA/<br>Japanese Patent Office | Authorized officer |
| Facsimile No. | Telephone No. |

Form PCT/ISA/210 (second sheet) (April 2007)

# EP 2 093 592 A1

<table>
<tr><td colspan="2"><strong>INTERNATIONAL SEARCH REPORT</strong></td><td>International application No.<br>PCT/JP2007/073718</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-240922 A  (Konica Corp.),<br>27 August, 2003 (27.08.03),<br>Claims; Par. No. [0378]; tables 6, 7, 10<br>(Family: none) | 5,13 |
| Y | JP 2004-4644 A  (Nitto Denko Corp.),<br>08 January, 2004 (08.01.04),<br>Claims; Par. No. [0012]<br>& US 2005/0152038 A1 | 6,14 |
| Y | JP 2004-46258 A  (Dainippon Printing Co., Ltd.),<br>12 February, 2004 (12.02.04),<br>Claims; Par. No. [0017]<br>(Family: none) | 6,14 |
| Y | JP 2006-106592 A  (Mitsubishi Rayon Co., Ltd.),<br>20 April, 2006 (20.04.06),<br>Par. No. [0028]; Figs. 1 to 3<br>(Family: none) | 7,8,15,16 |

Form PCT/ISA/210 (continuation of second sheet) (April 2007)

**EP 2 093 592 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3515426 B
- JP 2006154838 A
- JP 2000193805 A